# EUROPEAN PATENT APPLICATION

(11) **EP 4 742 548 A1**
(43) Date of publication of application: **13.05.2026**
(21) Application number: 24844441.6
(22) Date of filing: 13.06.2024
(51) Int. Cl.: H04B 1/40

(54) **RADIO FREQUENCY UNIT, SIGNAL BIASING UNIT, TERMINAL UNIT AND FUSION SYSTEM**

(30) Priority: 25.07.2023 CN 202310923070
(71) Applicant: Huawei Technologies Co., Ltd., Shenzhen, Guangdong 518129 (CN)
(72) Inventor: XIAO, Weihong, Shenzhen, Guangdong 518129 (CN); DAOJIAN, Dingjiu, Shenzhen, Guangdong 518129 (CN); CHEN, Shangmin, Shenzhen, Guangdong 518129 (CN); LI, Yue, Shenzhen, Guangdong 518129 (CN)
(74) Representative: Goddar, Heinz J.
(86) International application number: PCT/CN2024/099047
(87) International publication number: WO 2025/020746

(57) **Abstract**

A radio frequency unit, a signal bias unit, a terminal element, and a fusion system are provided, to implement a low-cost deployment solution of an antenna system and a sensor system. The fusion system includes a signal processing unit and N terminal elements, the N terminal elements include at least one radiating element and at least one sensing element, and/or include at least one radiating and sensing fusion element, and the signal processing unit is configured to: send a radio frequency transmit signal and/or a sensing request signal to the N terminal elements, or receive a radio frequency receive signal and/or a sensing-acquired signal from the N terminal elements. The radiating element and the sensing element are integrated into one feeding network, to not only complete deployment of two systems of the antenna system and the sensor system at one time, but also reuse a receive/transmit link in a same feeding network to complete information transmission of the two systems, thereby effectively reducing labor and material costs and implementing the low-cost deployment solution of the antenna system and the sensor system.

## Description

### CROSS-REFERENCE TO RELATED APPLICATIONS

This application claims priority to Chinese Patent Application No. 202310923070.3, filed with the China National Intellectual Property Administration on July 25, 2023 and entitled "RADIO FREQUENCY UNIT, SIGNAL BIAS UNIT, TERMINAL ELEMENT, AND FUSION SYSTEM", which is incorporated herein by reference in its entirety.

### TECHNICAL FIELD

This application relates to the field of communication technologies, and in particular, to a radio frequency unit, a signal bias unit, a terminal element, and a fusion system.

### BACKGROUND

Due to a blocking and shielding effect of a building, it is very difficult to effectively propagate an outdoor base station signal to an indoor environment. Therefore, an antenna system is usually distributed indoors, to improve indoor signal strength. The indoor antenna system may evenly transmit an outdoor communication signal to indoor corners, which can effectively resolve a problem of an uneven distribution of indoor signal strength and quality. Therefore, currently, the indoor antenna system has basically become an infrastructure, and corresponding indoor antenna systems are arranged in most places with buildings.

Similarly, for safety, various sensors are usually deployed indoors. For example, some sensors currently deployed indoors include a smoke sensor in a residential building, a temperature sensor in an equipment room area, a vibration sensor in an earthquake-prone area, and a humidity sensor in a coastal area. With improvement of people's quality of life, the sensor also has basically become an infrastructure. Corresponding sensor systems are deployed in most indoor environments in which people live, to detect a potential risk in a timely manner, and ensure safety of people's lives and property.

However, although both the antenna system and the sensor system are deployed in some indoor environments, most current deployment solutions require large manpower and material resources, require high deployment costs, and are inconvenient for subsequent maintenance. Therefore, currently, low-cost deployment of the antenna system and the sensor system needs to be further studied.

### SUMMARY

This application provides a radio frequency unit, a signal bias unit, a terminal element, and a fusion system, to implement a low-cost deployment solution of an antenna system and a sensor system.

According to a first aspect, this application provides a radiating and sensing fusion system. The system includes a signal processing unit and N terminal elements connected to the signal processing unit. The N terminal elements include at least one radiating element and at least one sensing element, where N is a positive integer greater than or equal to 2, and/or include at least one radiating and sensing fusion element, where N is a positive integer. In an information sending scenario, the signal processing unit may send a radio frequency transmit signal and/or a sensing request signal to the N terminal elements. In an information receiving scenario, the signal processing unit may receive a radio frequency receive signal from the radiating element in the N terminal elements, a sensing-acquired signal from the sensing element in the N terminal elements, and a radio frequency receive signal and/or a sensing-acquired signal from the fusion element in the N terminal elements.

In the foregoing solution, the radiating element and the sensing element are integrated into one feeding network, to not only complete deployment of two systems of an antenna system and a sensor system at one time, thereby reducing labor costs, but also reuse a receive/transmit link in a same feeding network to complete information transmission of the two systems of the antenna system and a sensing system, thereby reducing material costs. In this way, a fusion system of the antenna system and the sensing system is designed, to help implement a low-cost deployment solution of the antenna system and the sensing system.

In a possible design of the first aspect, the fusion system may further include a power supply, and the power supply is connected to the signal processing unit; the power supply is configured to send a direct-current power supply signal to the signal processing unit; and the signal processing unit is further configured to send the direct-current power supply signal from the power supply to the N terminal elements.

In the foregoing design, after the sensing element is integrated into a feeding network of an existing antenna system, even if an original power supply capability of the feeding network cannot meet a requirement of a terminal element in the integrated feeding network, a disposed external power supply can supply power to the terminal element in the feeding network, to support integration of the radiating element and the sensing element into a fusion element.

In a possible design of the first aspect, the signal processing unit may include a radio frequency unit and a signal bias unit, and the signal bias unit is separately connected to the radio frequency unit and the N terminal elements. In the information sending scenario, the radio frequency unit is configured to send the radio frequency transmit signal and/or the sensing request signal to the signal bias unit, and the signal bias unit is configured to send the radio frequency transmit signal and/or the sensing request signal from the radio frequency unit to the N terminal elements. In the information receiving scenario, the signal bias unit is configured to send the radio frequency receive signal from the radiating element in the N terminal elements, the sensing-acquired signal from the sensing element in the N terminal elements, and the radio frequency receive signal and/or the sensing-acquired signal from the fusion element in the N terminal elements to the radio frequency unit, and the radio frequency unit is configured to receive the radio frequency receive signal and/or the sensing-acquired signal from the signal bias unit.

In the foregoing design, the signal processing unit includes the radio frequency unit and the signal bias unit. A structure of the radio frequency unit may be the same as a structure of a radio frequency unit in the existing antenna system, and the signal bias unit may be a new component that is additionally developed and then added to the existing antenna system. In this way, in this design, the existing radio frequency unit in the existing antenna system can be directly used. Regardless of a scenario, provided that the antenna system is arranged currently, the newly developed signal bias unit can be added to the antenna system, so that a sensing function is fused in the antenna system. This fusion manner is simple, and only a small change needs to be made to the existing antenna system, without a need to change the structure of the radio frequency unit in the existing antenna system. This helps reduce research and development costs, labor costs, and material costs.

In a possible implementation of the foregoing design, the signal bias unit may include T third interfaces, the T third interfaces are connected to T radio frequency cables, and one or more terminal elements are disposed on each radio frequency cable, where T is a positive integer. In the information sending scenario, the signal bias unit may send the radio frequency transmit signal and/or the sensing request signal through the T third interfaces. In the information receiving scenario, the signal bias unit may receive the radio frequency receive signal and/or the sensing-acquired signal through the T third interfaces.

In the foregoing implementation, the N terminal elements are disposed in a distributed manner through the T radio frequency cables, so that communication between the signal processing unit and the N terminal elements can be evenly distributed on different radio frequency cables. This reduces communication pressure in a case of distributing the N terminal elements on one radio frequency cable.

In a possible implementation of the foregoing design, the radio frequency unit may include M radio frequency interfaces, the signal bias unit may include M first interfaces and the T third interfaces, the M radio frequency interfaces are connected to the M first interfaces in one-to-one correspondence, and the T third interfaces are connected to the N terminal elements, where M and T are positive integers. In the information sending scenario, the radio frequency unit may send the radio frequency transmit signal through the M radio frequency interfaces, and the signal bias unit may receive the radio frequency transmit signal through the T third interfaces. In the signal receiving scenario, the signal bias unit may receive the radio frequency receive signal through the T third interfaces, and the radio frequency unit may receive the radio frequency receive signal through the M radio frequency interfaces.

In the foregoing implementation, the M radio frequency interfaces may be original radio frequency interfaces of the radio frequency unit in the existing antenna system. The interface of the signal bias unit is configured based on the original radio frequency interface of the radio frequency unit, to implement a radio frequency receiving/sending function of the fusion element without modifying the interface of the radio frequency unit. This reduces modifications to the original antenna system as much as possible and reduces labor costs.

In a possible implementation of the foregoing design, the radio frequency unit may include a sensing interface, the signal bias unit may include a second interface and the T third interfaces, the sensing interface is connected to the second interface, and the T third interfaces are connected to the N terminal elements, where T is a positive integer. In the information sending scenario, the radio frequency unit may send the sensing request signal through the sensing interface, and the signal bias unit may receive the sensing request signal through the second interface, and send the sensing request signal through the T third interfaces. In the information receiving scenario, the signal bias unit may receive the sensing-acquired signal through the T third interfaces, and send the sensing-acquired signal through the second interface, and the radio frequency unit may receive the sensing-acquired signal through the sensing interface.

In the foregoing implementation, the sensing interface may be an original interface of the radio frequency unit in the existing antenna system, for example, an AISC interface. The interface of the signal bias unit is configured with reference to the original interface of the radio frequency unit, to implement the sensing receiving/sending function of the fusion element without modifying the interface of the radio frequency unit. This reduces modifications to the original antenna system as much as possible and reduces labor costs.

In a possible implementation of the foregoing design, the signal bias unit may include a power interface and the T third interfaces, the power interface is connected to the power supply, and the T third interfaces are connected to the N terminal elements, where T is a positive integer. The signal bias unit may be further configured to: receive the direct-current power supply signal from the power supply through the power interface, and send the direct-current power supply signal through the T third interfaces. In this way, the signal bias unit may provide the direct-current power supply signal from the power supply to the N terminal elements.

In a possible implementation of the foregoing design, the radio frequency transmit signal and the radio frequency receive signal that are received by the signal bias unit are high-frequency alternating-current signals, and the sensing request signal and the sensing-acquired signal that are received by the signal bias unit are low-frequency alternating-current signals. In this case, the signal bias unit may include a first bias circuit, the first bias circuit includes at least one first filter element, a second filter element, and a third filter element, a first terminal of the at least one first filter element is configured to receive the radio frequency transmit signal from the radio frequency unit or the radio frequency receive signal from the terminal element, a first terminal of the second filter element is configured to receive the sensing request signal from the radio frequency unit or the sensing-acquired signal from the terminal element, a first terminal of the third filter element is configured to receive the direct-current power supply signal, and a second terminal of the at least one first filter element, a second terminal of the second filter element, and a second terminal of the third filter element are connected and then connected to the N terminal elements. The first filter element may be configured to filter out a direct-current signal and a low-frequency alternating-current signal in an input signal, the second filter element may be configured to filter out a direct-current signal and a high-frequency alternating-current signal in an input signal, and the third filter element may be configured to filter out an alternating-current signal in an input signal.

In the foregoing implementation, the first filter element, the second filter element, and the third filter element are disposed in the signal bias unit, so that a pure radio frequency transmit signal, a pure sensing request signal, and a pure direct-current power supply signal can be transmitted to the terminal element through the signal bias unit, and a pure radio frequency receive signal and a pure sensing-acquired signal can be transmitted to the radio frequency unit through the signal bias unit.

In a further possible implementation, the first filter element and the second filter element are capacitors, and the third filter element is an inductor. In this way, a characteristic "passing an alternating current and blocking a direct current" of the capacitor is used. A capacitor bandpass frequency of the first filter element is set to a high frequency, to obtain a pure high-frequency alternating-current radio frequency transmit signal and a pure high-frequency alternating-current radio frequency receive signal through filtering; and a capacitor bandpass frequency of the second filter element is set to a low frequency, to obtain a pure low-frequency alternating-current sensing request signal and a pure low-frequency alternating-current sensing-acquired signal through filtering. In addition, a characteristic "passing a direct current and blocking an alternating current" of the inductor can be used, to obtain a pure direct-current power supply signal through filtering.

In a possible implementation of the foregoing design, the sensing request signal from the radio frequency unit is a differential signal, and the sensing-acquired signal from the terminal element is a low-frequency alternating-current signal. In this case, the signal bias unit may include a first conversion circuit, a first interface of the first conversion circuit is configured to receive the sensing request signal from the radio frequency unit, and a second interface of the first conversion circuit is configured to be connected to the N terminal elements. In the information sending scenario, the first conversion circuit may convert the sensing request signal received through the first interface of the first conversion circuit into a low-frequency alternating-current signal, and send the converted sensing request signal through the second interface of the first conversion circuit. In the signal receiving scenario, the first conversion circuit may receive the sensing-acquired signal from the terminal element through the second interface of the first conversion circuit, convert the sensing-acquired signal into a differential signal, and then send the converted sensing-acquired signal through the first interface of the first conversion circuit.

In the foregoing implementation, the first conversion circuit converts a class of a signal sent by a network management device into a class of a signal received by the sensing element, and converts a class of a signal sent by the sensing element into a class of a signal received by the network management device, so that the network management device and the sensing element can communicate smoothly.

In a possible design of the first aspect, the signal processing unit may include a radio frequency unit, the radio frequency unit includes a radio frequency processing circuit and a bias processing circuit, and the bias processing circuit is separately connected to the radio frequency processing circuit and the N terminal elements; In the information sending scenario, the radio frequency processing circuit may send the radio frequency transmit signal and/or the sensing request signal to the bias processing circuit, and the bias processing circuit may send the radio frequency transmit signal and/or the sensing request signal from the radio frequency processing circuit to the N terminal elements. In the signal receiving scenario, the bias processing circuit may send the radio frequency receive signal and/or the sensing-acquired signal from the N terminal elements to the radio frequency processing circuit, and the radio frequency processing circuit may receive the radio frequency receive signal and/or the sensing-acquired signal from the bias processing circuit.

In the foregoing design, the signal processing unit may be a unit obtained by improving the structure of the radio frequency unit in the existing antenna system. A bias processing function is fused into the radio frequency unit in the existing antenna system, and a system fused with a sensing function may be obtained by directly replacing the radio frequency unit in the existing antenna system. In this way, a new component does not need to be disposed while labor costs and material costs are reduced, thereby reducing system space occupied by adding a new function and implementing a miniaturization design of the system.

In a possible implementation of the foregoing design, the radio frequency processing circuit may include a first interface and M second interfaces, the bias processing circuit may include M first interfaces and T second interfaces, the M second interfaces of the radio frequency processing circuit are connected to the M first interfaces of the bias processing circuit, and the T second interfaces of the bias processing circuit are connected to the N terminal elements, where M and T are positive integers. In the information sending scenario, the radio frequency processing circuit may receive the radio frequency transmit signal and/or the sensing request signal through the first interface of the radio frequency processing circuit, and send the radio frequency transmit signal and/or the sensing request signal to the bias processing circuit through the M second interfaces of the radio frequency processing circuit. The bias processing circuit may receive the radio frequency transmit signal and/or the sensing request signal from the radio frequency processing circuit through the M first interfaces of the bias processing circuit, and send the radio frequency transmit signal and/or the sensing request signal to the N terminal elements through the T second interfaces of the bias processing circuit. In the information receiving scenario, the bias processing circuit may receive the radio frequency receive signal and/or the sensing-acquired signal from the N terminal elements through the T second interfaces of the bias processing circuit, and send the radio frequency receive signal and/or the sensing-acquired signal to the radio frequency processing circuit through the M first interfaces of the bias processing circuit. The radio frequency processing circuit may receive the radio frequency receive signal and/or the sensing-acquired signal from the bias processing circuit through the M second interfaces of the radio frequency processing circuit, and send the radio frequency receive signal and/or the sensing-acquired signal through the first interface of the radio frequency processing circuit.

In the foregoing implementation, an interface connection relationship between the radio frequency processing circuit and the bias processing circuit is configured, and a mixed signal including the radio frequency transmit signal and the sensing request signal may be transmitted through an interface, or a mixed signal including the radio frequency receive signal and the sensing-acquired signal may be transmitted through an interface. The sensing receiving/sending function is further fused based on a radio frequency receiving/sending function of the radio frequency unit in the existing antenna system.

In a possible implementation of the foregoing design, the radio frequency processing circuit may include a signal splitting/coupling circuit, a second conversion circuit, and a signal coupling/splitting circuit, a second interface of the signal splitting/coupling circuit is connected to a second interface of the signal coupling/splitting circuit, a third interface of the signal splitting/coupling circuit is connected to a first interface of the second conversion circuit, a second interface of the second conversion circuit is connected to a third interface of the signal coupling/splitting circuit, and a first interface of the signal coupling/splitting circuit is connected to the bias processing circuit. In the signal sending scenario, the signal splitting/coupling circuit may receive the radio frequency transmit signal and/or the sensing request signal through a first interface of the signal splitting/coupling circuit, send the radio frequency transmit signal through the second interface of the signal splitting/coupling circuit, and send the sensing request signal through the third interface of the signal splitting/coupling circuit; the second conversion circuit may convert the sensing request signal input through the first interface of the second conversion circuit into a low-frequency alternating-current signal, and send the converted sensing request signal through the second interface of the second conversion circuit; and the signal coupling/splitting circuit may receive the radio frequency transmit signal through the second interface of the signal coupling/splitting circuit, receive the converted sensing request signal through the third interface of the signal coupling/splitting circuit, and send the radio frequency transmit signal and/or the converted sensing request signal through the first interface of the signal coupling/splitting circuit. In the signal receiving scenario, the signal coupling/splitting circuit may receive the radio frequency receive signal and/or the sensing-acquired signal through the first interface of the signal coupling/splitting circuit, send the radio frequency receive signal through the second interface of the signal coupling/splitting circuit, and send the sensing-acquired signal through the third interface of the signal coupling/splitting circuit; the second conversion circuit may convert the sensing-acquired signal input through the second interface of the second conversion circuit into a differential signal, and send the converted sensing-acquired signal through the first interface of the second conversion circuit; and the signal splitting/coupling circuit may receive the radio frequency receive signal through the second interface of the signal splitting/coupling circuit, receive the sensing-acquired signal through the third interface of the signal splitting/coupling circuit, and send the radio frequency receive signal and/or the sensing request signal through the first interface of the signal splitting/coupling circuit.

In the foregoing implementation, the signal splitting/coupling circuit, the second conversion circuit, and the signal coupling/splitting circuit are configured in the original radio frequency unit, so that through the three circuits, the class of the signal sent by the network management device can be converted into the class of the signal received by the sensing element, and the class of the signal sent by the sensing element can be converted into the class of the signal received by the network management device, thereby providing support for smooth communication between the network management device and the sensing element.

In a possible implementation of the foregoing design, the bias processing circuit may include a power interface, and the power interface is connected to the power supply; and the bias processing circuit may further receive the direct-current power supply signal from the power supply through the power interface of the bias processing circuit, and send the direct-current power supply signal to the N terminal elements. In this way, after passing through the power interface of the radio frequency unit, the direct-current power supply signal output by the power supply may be all provided to the N terminal elements, thereby implementing a maximum power supply function.

In a possible implementation of the foregoing design, the bias processing circuit may include a seventh filter element, a first terminal of the seventh filter element corresponds to the power interface of the bias processing circuit, and a second terminal of the seventh filter element is connected to the N terminal elements; and the seventh filter element may filter out an alternating-current signal in an input signal. In this way, even if the direct-current power supply signal output by the power supply is impure, an alternating-current signal in the impure signal can be filtered by the seventh filter element, so that the pure direct-current power supply signal is transmitted to the N terminal elements through the seventh filter element.

In a further possible implementation, the seventh filter element is an inductor. In this way, the pure direct-current power supply signal can be obtained through filtering by using the characteristic "passing a direct current and blocking an alternating current" of the inductor.

In a possible design of the first aspect, the radiating and sensing fusion element may include a radiating element, a sensing element, and a second bias circuit, a first interface of the second bias circuit is connected to the signal processing unit, a second interface of the second bias circuit is connected to the radiating element, and a third interface of the second bias circuit is connected to the sensing element. In the information sending scenario, the second bias circuit may receive the radio frequency transmit signal and/or the sensing request signal from the signal processing unit through the first interface of the second bias circuit, send the radio frequency transmit signal to the radiating element through the second interface of the second bias circuit, and send the sensing request signal to the sensing element through the third interface of the second bias circuit. The radiating element may convert the radio frequency transmit signal from the second bias circuit into an electromagnetic wave signal, and then send the electromagnetic wave signal. The sensing element may perform a corresponding acquisition operation based on an indication of the sensing request signal from the second bias circuit. In the signal receiving scenario, the radiating element may convert a received electromagnetic wave signal into a radio frequency receive signal, and then send the radio frequency receive signal to the second bias circuit. The sensing element may send, to the second bias circuit, a sensing-acquired signal acquired in a period of time. The second bias circuit may receive the radio frequency receive signal from the radiating element through the second interface of the second bias circuit, receive the sensing-acquired signal from the sensing element through the third interface of the second bias circuit, and send the radio frequency receive signal and/or the sensing-acquired signal to the signal processing unit through the first interface of the second bias circuit.

In the foregoing design, the second bias circuit is disposed in the fusion element, to implement a function of performing split transmission on a signal that is input by the signal processing unit into the fusion element and a function of performing fused transmission on a signal that is input by the radiating element and a signal that is input by the sensing element, and implement fusion of an antenna receiving/sending function and a sensing receiving/sending function.

In a possible implementation of the foregoing design, the second bias circuit may further include a fourth interface, and the fourth interface is connected to a power interface of the sensing element; and the second bias circuit may further receive the direct-current power supply signal from the signal processing unit through the first interface of the second bias circuit, and send the direct-current power supply signal to the sensing element through the fourth interface of the second bias circuit. In this way, the direct-current power supply signal output by the power supply may be further provided to the N terminal elements through the second bias circuit.

In a possible implementation of the foregoing design, the second bias circuit may include a fourth filter element, a fifth filter element, and a sixth filter element, a first terminal of the fourth filter element, a first terminal of the fifth filter element, and a first terminal of the sixth filter element are connected and then connected to the first interface of the second bias circuit, a second terminal of the fourth filter element corresponds to the second interface of the second bias circuit, a second terminal of the fifth filter element corresponds to the third interface of the second bias circuit, and a second terminal of the sixth filter element corresponds to the fourth interface of the second bias circuit. The fourth filter element may be configured to filter out a direct-current signal and a low-frequency alternating-current signal in an input signal, the fifth filter element may be configured to filter out a direct-current signal and a high-frequency alternating-current signal in an input signal, and the sixth filter element may be configured to filter out an alternating-current signal in an input signal.

In the foregoing implementation, the fourth filter element, the fifth filter element, and the sixth filter element are disposed in the second bias circuit, so that a pure radio frequency transmit signal, a pure sensing request signal, and a pure direct-current power supply signal can be transmitted to the terminal element through the second bias circuit, and a pure radio frequency receive signal and a pure sensing-acquired signal can be transmitted to the signal processing unit through the second bias circuit.

In a further possible implementation, the fourth filter element and the fifth filter element are capacitors, and the sixth filter element is an inductor. In this way, the characteristic "passing an alternating current and blocking a direct current" of the capacitor is used. A capacitor bandpass frequency of the fourth filter element is set to a high frequency, to obtain a pure high-frequency alternating-current radio frequency transmit signal and a pure high-frequency alternating-current radio frequency receive signal through filtering; and a capacitor bandpass frequency of the fifth filter element is set to a low frequency, to obtain a pure low-frequency alternating-current sensing request signal and a pure low-frequency alternating-current sensing-acquired signal through filtering. In addition, a characteristic "passing a direct current and blocking an alternating current" of the inductor can be used, to obtain a pure direct-current power supply signal through filtering.

In a possible design of the first aspect, the fusion system may further include a baseband unit, and the baseband unit is connected to the signal processing unit. In the information sending scenario, the baseband unit may send a radio frequency transmit signal to the signal processing unit, and the signal processing unit may receive the radio frequency transmit signal from the baseband unit. In the information receiving scenario, the signal processing unit may send a radio frequency receive signal to the baseband unit, and the baseband unit may receive the radio frequency receive signal from the signal processing unit.

In the foregoing design, the baseband unit is disposed to be connected to the signal processing unit, to implement a communication connection between the baseband unit and the radiating element or the fusion element in the terminal element through the signal processing unit, and implement a receiving/sending operation of a radio frequency signal.

In a possible design of the first aspect, the fusion system may further include a network management device, and the network management device is connected to the baseband unit. In the information sending scenario, the network management device may send the sensing request signal to the baseband unit, the baseband unit may send the sensing request signal to the signal processing unit, and the signal processing unit may receive the sensing request signal from the baseband unit. In the information receiving scenario, the signal processing unit may send the sensing-acquired signal to the baseband unit, the baseband unit may receive the sensing-acquired signal from the signal processing unit and send the sensing-acquired signal to the network management device, and the network management device may receive the sensing-acquired signal from the baseband unit.

In the foregoing design, the network management device is disposed to be connected to the baseband unit, to implement a communication connection between the network management device and the sensing element or the fusion element in the terminal element through the baseband unit and the signal processing unit, and implement a receiving/sending operation of a sensing signal.

According to a second aspect, this application provides a radio frequency unit. The radio frequency unit includes a first interface and at least one second interface, the first interface is configured to be connected to a baseband unit, the at least one second interface is configured to be connected to N terminal elements, and the N terminal elements include at least one radiating element and at least one sensing element, where N is an integer greater than or equal to 2, and/or include at least one radiating and sensing fusion element, where N is a positive integer. In an information sending scenario, the radio frequency unit is configured to: receive a radio frequency transmit signal and/or a sensing request signal from the baseband unit through the first interface, and send the radio frequency transmit signal and/or the sensing request signal to the N terminal elements through the at least one second interface. In an information receiving scenario, the radio frequency unit is configured to: receive a radio frequency receive signal from the radiating element in the N terminal elements, a sensing-acquired signal from the sensing element in the N terminal elements, and a radio frequency receive signal and/or a sensing-acquired signal from the fusion element in the N terminal elements through the at least one second interface, and send the radio frequency receive signal and/or the sensing-acquired signal to the baseband unit through the first interface.

In a possible design of the second aspect, the at least one second interface may include M radio frequency interfaces and a sensing interface, the M radio frequency interfaces are connected to M first interfaces of a signal bias unit in one-to-one correspondence, the sensing interface is connected to a second interface of the signal bias unit, and a third interface of the signal bias unit is connected to the N terminal elements, where M is a positive integer. The radio frequency unit is specifically configured to: send the radio frequency transmit signal or receive the radio frequency receive signal through the M radio frequency interfaces, and send the sensing request signal or receive the sensing-acquired signal through the sensing interface.

In a possible design of the second aspect, the radio frequency unit may include a radio frequency processing circuit and a bias processing circuit, the radio frequency processing circuit includes a first interface and M second interfaces, the bias processing circuit includes M first interfaces and T second interfaces, the first interface of the radio frequency processing circuit corresponds to the first interface of the radio frequency unit, the M second interfaces of the radio frequency processing circuit are connected to the M first interfaces of the bias processing circuit, and the T second interfaces of the bias processing circuit correspond to at least one third interface of the radio frequency unit, where T is a positive integer. In the information sending scenario, the radio frequency processing circuit may receive the radio frequency transmit signal and/or the sensing request signal through the first interface of the radio frequency processing circuit, and send the radio frequency transmit signal and/or the sensing request signal to the bias processing circuit through the M second interfaces of the radio frequency processing circuit. The bias processing circuit may receive the radio frequency transmit signal and/or the sensing request signal from the radio frequency processing circuit through the M first interfaces of the bias processing circuit, and send the radio frequency transmit signal and/or the sensing request signal to the N terminal elements through the T second interfaces of the bias processing circuit. In the information receiving scenario, the bias processing circuit may receive the radio frequency receive signal and/or the sensing-acquired signal from the N terminal elements through the T second interfaces of the bias processing circuit, and send the radio frequency receive signal and/or the sensing-acquired signal to the radio frequency processing circuit through the M first interfaces of the bias processing circuit. The radio frequency processing circuit may receive the radio frequency receive signal and/or the sensing-acquired signal from the bias processing circuit through the M second interfaces of the radio frequency processing circuit, and send the radio frequency receive signal and/or the sensing-acquired signal through the first interface of the radio frequency processing circuit.

In a possible implementation of the foregoing design, the radio frequency processing circuit may include a signal splitting/coupling circuit, a second conversion circuit, and a signal coupling/splitting circuit, a first interface of the signal splitting/coupling circuit corresponds to the first interface of the radio frequency processing circuit, a second interface of the signal splitting/coupling circuit is connected to a second interface of the signal coupling/splitting circuit, a third interface of the signal splitting/coupling circuit is connected to a first interface of the second conversion circuit, a second interface of the second conversion circuit is connected to a third interface of the signal coupling/splitting circuit, and a first interface of the signal coupling/splitting circuit is connected to the M second interfaces of the radio frequency processing circuit. In the information sending scenario, the signal splitting/coupling circuit may receive the radio frequency transmit signal and/or the sensing request signal through a first interface of the signal splitting/coupling circuit, send the radio frequency transmit signal through the second interface of the signal splitting/coupling circuit, and send the sensing request signal through the third interface of the signal splitting/coupling circuit; the second conversion circuit may convert the sensing request signal input through the first interface of the second conversion circuit into a low-frequency alternating-current signal, and send the converted sensing request signal through the second interface of the second conversion circuit; and the signal coupling/splitting circuit may receive the radio frequency transmit signal through the second interface of the signal coupling/splitting circuit, receive the converted sensing request signal through the third interface of the signal coupling/splitting circuit, and send the radio frequency transmit signal and/or the converted sensing request signal through the first interface of the signal coupling/splitting circuit. In the information receiving scenario, the signal coupling/splitting circuit may receive the radio frequency receive signal and/or the sensing-acquired signal through the first interface of the signal coupling/splitting circuit, send the radio frequency receive signal through the second interface of the signal coupling/splitting circuit, and send the sensing-acquired signal through the third interface of the signal coupling/splitting circuit; the second conversion circuit may convert the sensing-acquired signal input through the second interface of the second conversion circuit into a differential signal, and send the converted sensing-acquired signal through the first interface of the second conversion circuit; and the signal splitting/coupling circuit may receive the radio frequency receive signal through the second interface of the signal splitting/coupling circuit, receive the sensing-acquired signal through the third interface of the signal splitting/coupling circuit, and send the radio frequency receive signal and/or the sensing request signal through the first interface of the signal splitting/coupling circuit.

In a possible implementation of the foregoing design, the bias processing circuit may further include a power interface, and the power interface is connected to the power supply; and the bias processing circuit is further configured to: receive a direct-current power supply signal from the power supply through the power interface of the bias processing circuit, and send the direct-current power supply signal to the N terminal elements through the T second interfaces of the bias processing circuit.

In a further possible implementation, the bias processing circuit further includes a seventh filter element, a first terminal of the seventh filter element corresponds to the power interface of the bias processing circuit, and a second terminal of the seventh filter element is connected to the M first interfaces of the bias processing circuit and then connected to the T second interfaces of the bias processing circuit; and the seventh filter element may be configured to filter out an alternating-current signal in an input signal.

In a further possible implementation, the seventh filter element is an inductor.

According to a third aspect, this application provides a signal bias unit, including M first interfaces, a second interface, and T third interfaces. The M first interfaces are connected to M radio frequency interfaces of a radio frequency unit, the second interface is connected to a sensing interface of the radio frequency unit, the T third interfaces are connected to N terminal elements, and the N terminal elements include at least one radiating element and at least one sensing element, where N is an integer greater than or equal to 2, and/or include at least one radiating and sensing fusion element, where N is a positive integer, and M and T are positive integers. In an information sending scenario, the signal bias unit is configured to: receive a radio frequency transmit signal from the radio frequency unit through the M first interfaces, receive a sensing request signal from the radio frequency unit through the second interface, and send the radio frequency transmit signal and/or the sensing request signal to the N terminal elements through the T third interfaces. In an information receiving scenario, the signal bias unit is configured to: receive a radio frequency receive signal from the radiating element in the N terminal elements, a sensing-acquired signal from the sensing element in the N terminal elements, and a radio frequency receive signal and/or a sensing-acquired signal from the fusion element in the N terminal elements through the T third interfaces, send the radio frequency receive signal to the radio frequency unit through the M first interfaces, and send the sensing-acquired signal to the radio frequency unit through the second interface.

In a possible design of the third aspect, the T second interfaces are connected to T radio frequency cables in one-to-one correspondence, and one or more terminal elements are disposed on each radio frequency cable.

In a possible design of the third aspect, the signal bias unit may further include a power interface, and the power interface is connected to a power supply; and the signal bias unit is further configured to: receive a direct-current power supply signal from the power supply through the power interface, and send the direct-current power supply signal to the N terminal elements through the T third interfaces.

In a possible design of the third aspect, the radio frequency transmit signal and the radio frequency receive signal that are received by the signal bias unit are high-frequency alternating-current signals, and the sensing request signal and the sensing-acquired signal that are received by the signal bias unit are low-frequency alternating-current signals. In this case, the signal bias unit may further include a first bias circuit, the first bias circuit includes M first filter elements, a second filter element, and a third filter element, first terminals of the M first filter elements are connected to the M first interfaces of the signal bias unit in one-to-one correspondence, a first terminal of the second filter element is configured to be connected to the second interface of the signal bias unit, a first terminal of the third filter element is connected to the power interface of the signal bias unit, second terminals of the M first filter elements, a second terminal of the second filter element, and a second terminal of the third filter element are connected and then connected to the T third interfaces of the signal bias unit. The first filter element may be configured to filter out a direct-current signal and a low-frequency alternating-current signal in an input signal, the second filter element may be configured to filter out a direct-current signal and a high-frequency alternating-current signal in an input signal, and the third filter element may be configured to filter out an alternating-current signal in an input signal.

In a further possible design, the first filter element and the second filter element are capacitors, and the third filter element is an inductor.

In a possible design of the third aspect, the sensing request signal from the radio frequency unit is a differential signal, and the sensing-acquired signal from the terminal element is a low-frequency alternating-current signal. In this case, the signal bias unit may include a first conversion circuit, a first interface of the first conversion circuit corresponds to the second interface of the signal bias unit, and a second interface of the first conversion circuit is configured to be connected to the T third interfaces of the signal bias unit. In the information sending scenario, the first conversion circuit may receive the sensing request signal from the radio frequency unit through the first interface of the first conversion circuit, convert the sensing request signal into a low-frequency alternating-current signal, and then send the converted sensing request signal through the second interface of the first conversion circuit. In the information receiving scenario, the first conversion circuit may receive the sensing-acquired signal from the terminal element through the second interface of the first conversion circuit, convert the sensing-acquired signal into a differential signal, and then send the converted sensing-acquired signal through the first interface of the first conversion circuit.

According to a fourth aspect, this application provides a terminal element, including a radiating element, a sensing element, and a second bias circuit. A first interface of the second bias circuit is connected to a signal processing unit, a second interface of the second bias circuit is connected to the radiating element, and a third interface of the second bias circuit is connected to the sensing element. In an information sending scenario, the second bias circuit may receive a radio frequency transmit signal and/or a sensing request signal from the signal processing unit through the first interface of the second bias circuit, send the radio frequency transmit signal to the radiating element through the second interface of the second bias circuit, and send the sensing request signal to the sensing element through the third interface of the second bias circuit. The radiating element may convert the radio frequency transmit signal from the second bias circuit into an electromagnetic wave signal, and then send the electromagnetic wave signal. The sensing element may perform a corresponding acquisition operation based on an indication of the sensing request signal from the second bias circuit. In an information receiving scenario, the radiating element may convert a received electromagnetic wave signal into a radio frequency receive signal, and then send the radio frequency receive signal to the second bias circuit. The sensing element may send, to the second bias circuit, a sensing-acquired signal acquired in a period of time. The second bias circuit may receive the radio frequency receive signal from the radiating element through the second interface of the second bias circuit, receive the sensing-acquired signal from the sensing element through the third interface of the second bias circuit, and send the radio frequency receive signal and/or the sensing-acquired signal to the signal processing unit through the first interface of the second bias circuit.

In a possible design of the fourth aspect, the second bias circuit may further include a fourth interface, and the fourth interface is connected to a power interface of the sensing element; and the second bias circuit is further configured to: receive a direct-current power supply signal from the signal processing unit through the first interface of the second bias circuit, and send the direct-current power supply signal to the sensing element through the fourth interface of the second bias circuit.

In a possible design of the fourth aspect, the second bias circuit may include a fourth filter element, a fifth filter element, and a sixth filter element, a first terminal of the fourth filter element, a first terminal of the fifth filter element, and a first terminal of the sixth filter element are connected and then connected to the first interface of the second bias circuit, a second terminal of the fourth filter element corresponds to the second interface of the second bias circuit, a second terminal of the fifth filter element corresponds to the third interface of the second bias circuit, and a second terminal of the sixth filter element corresponds to the fourth interface of the second bias circuit. The fourth filter element may be configured to filter out a direct-current signal and a low-frequency alternating-current signal in an input signal, the fifth filter element may be configured to filter out a direct-current signal and a high-frequency alternating-current signal in an input signal, and the sixth filter element may be configured to filter out an alternating-current signal in an input signal.

In a further possible design, the fourth filter element and the fifth filter element are capacitors, and the sixth filter element is an inductor.

The designs in the first aspect are also applicable to the second aspect to the fourth aspect. For corresponding beneficial effects, refer to technical effects that can be achieved by corresponding designs in the first aspect. Details are not described herein again.

### BRIEF DESCRIPTION OF DRAWINGS

FIG. 1 is a diagram of an example possible application scenario according to this application;
FIG. 2 is a diagram of an example architecture of a radiating and sensing fusion system according to this application;
FIG. 3 is a diagram of an example structure of a radiating and sensing fusion system according to this application;
FIG. 4 is a diagram of an example structure of a signal bias unit according to this application;
FIG. 5 is a diagram of an example structure of a first bias circuit according to this application;
FIG. 6 is a diagram of an example structure of a first conversion circuit according to this application;
FIG. 7 is a diagram of an example structure of a radio frequency unit according to this application;
FIG. 8 is a diagram of an example specific structure of a radio frequency unit according to an embodiment of this application;
FIG. 9 is a diagram of an example structure of a fusion element according to an embodiment of this application;
FIG. 10 is a diagram of an example structure of a second bias circuit according to this application; and
FIG. 11 is a diagram of an example specific structure of a second bias circuit according to this application.

### DESCRIPTION OF EMBODIMENTS

The following describes in detail embodiments of this application with reference to accompanying drawings.

Some terms in this application are described below. It should be noted that these explanations are for ease of understanding by a person skilled in the art, and are not intended to limit the protection scope claimed by this application.

### 1. Radiating element

The radiating element may also be referred to as an antenna element, is a core element that constitutes an antenna array, and is configured to transmit and receive a radio wave. The antenna array usually includes a plurality of radiating elements arranged based on a specific rule. If the plurality of radiating elements are arranged on a straight line, the antenna array is referred to as a straight line antenna array. If the radiating elements are arranged on a plane, the antenna array is referred to as a planar antenna array.

### 2. Sensing element

The sensing element is a unit having a data collection function, and collected data may include various physical quantities, identifiers, audio data, video data, or the like. Some examples of the sensing element include: a sensor, for example, an infrared sensor, a barometric pressure sensor, a smoke sensor, a humidity sensor, a temperature sensor, or a vibration sensor; a multimedia information collection device, for example, a CD-ROM drive, an audio card, a video capture card, a microphone, an electronic organ, a scanning device, a recorder, a digital camera, or a video camera; a two-dimensional code collection device, for example, a scanner, a two-dimensional code collector, or a point of sale (point of sale, POS) machine; and a real-time positioning device, for example, a global positioning system (global positioning system, GPS) transceiver, a BeiDou satellite navigation system transceiver, a global navigation satellite system transceiver, a Galileo satellite navigation system transceiver, or a quasi-zenith satellite system transceiver.

### 3. Radiating and sensing fusion element

The radiating and sensing fusion element is an element obtained by fusing at least one radiating element and at least one sensing element, for example, may be an element obtained by fusing one radiating element and one sensing element, or may be an element obtained by fusing one radiating element and a plurality of sensing elements, or may be an element obtained by fusing a plurality of radiating elements and one sensing element, or may be an element obtained by fusing a plurality of radiating elements and a plurality of sensing elements. This is not specifically limited.

The foregoing describes some terms used in this application, and the following describes possible application scenarios of this application.

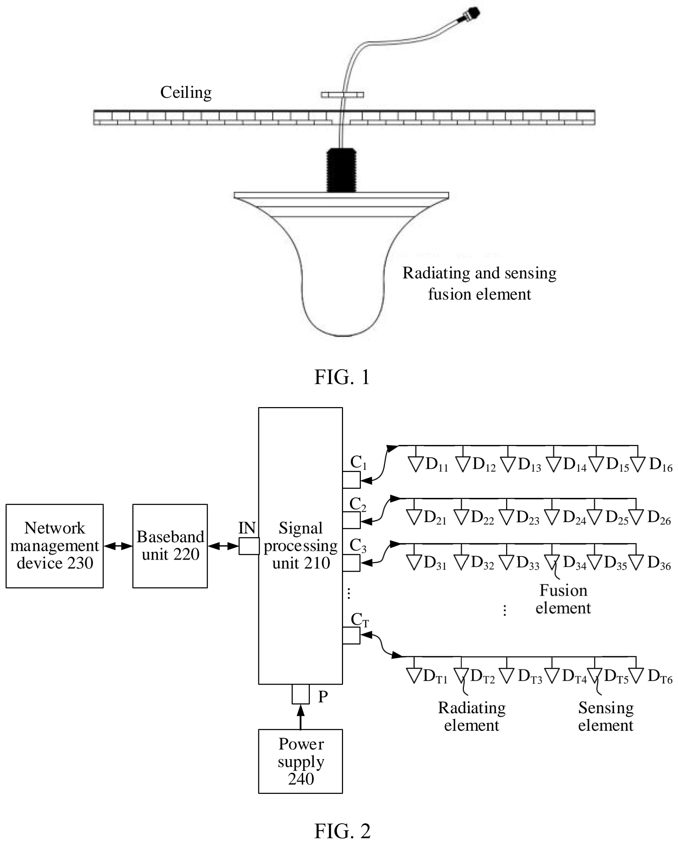

In a possible implementation, a radiating and sensing fusion system may be arranged indoors. For example, FIG. 1 is a diagram of an example possible application scenario in this application. In this application scenario, an example in which the radiating and sensing fusion system is arranged on an indoor ceiling is used. It may be understood that the radiating and sensing fusion system may alternatively be arranged at another indoor location, for example, on a wall, a ground, or a ceiling in any one or more of four directions of an upper direction, a lower direction, a left direction, and a right direction, to enhance signal quality of an indoor antenna and capture and transmit an indoor sensing signal.

It should be understood that the foregoing application scenario is merely an example. The fusion system provided in this application may alternatively be used in another possible scenario, and is not limited to the scenario in the foregoing example. For example, the radiating and sensing fusion system may alternatively be arranged in an outdoor environment, and serves as an integrated system in which an access network device such as a base station or a core network transmits an antenna signal and a sensing signal. For another example, the radiating and sensing fusion system may alternatively be arranged in a vehicle. An antenna in the vehicle and a sensor in the vehicle are integrated, to reduce a quantity of cables in the vehicle, and reserve more functional space for the vehicle. For still another example, the radiating and sensing fusion system may alternatively be applied in the agricultural cultivation field. A temperature sensor, a humidity sensor, and a communication antenna are integrated in a greenhouse, to implement an integrated design of crop environment monitoring and environment information transmission. For yet another example, the radiating and sensing fusion system may alternatively be used in an uncrewed aerial vehicle, and serves as an integrated system of an airborne antenna system and an airborne sensor system, to implement a miniaturization and low-cost design of the uncrewed aerial vehicle. For yet another example, the radiating and sensing fusion system may alternatively be integrated in an air raid shelter, and serves as a detection system for geological disaster sensing and disaster warning. For another example, the radiating and sensing fusion system may alternatively be integrated into a weather station, and serves as an integrated system for air-quality environment monitoring and air-quality broadcasting. Examples are not enumerated herein. It should be noted that the application scenarios described in this application are intended to describe the technical solutions in this application more clearly, and do not constitute a limitation on the technical solutions provided in this application.

As described in the background, in an indoor environment in which not only an antenna system needs to be deployed but also a sensing system (also referred to as a sensor system) need to be deployed, the antenna system and the sensing system usually need to be deployed in batches. In other words, the antenna system and the sensing system have respective independent signal receive/transmit links. A large amount of labor costs and material costs need to be introduced, which does not comply with a low-cost design concept.

In view of the foregoing problem, this application provides a solution for fused deployment of an antenna system and a sensing system. A feeding network in the antenna system is reused, so that the sensing system can be deployed synchronously while the antenna system is deployed, thereby reducing labor costs and material costs.

Based on the foregoing content, the following specifically describes the solutions provided in this application with reference to the accompanying drawings.

FIG. 2 is a diagram of an architecture of a radiating and sensing fusion system according to this application. The system architecture includes a signal processing unit 210 and N terminal elements connected to the signal processing unit 210. The N terminal elements may include at least one radiating element and at least one sensing element, and/or may include at least one radiating and sensing fusion element. For example, the N terminal elements may include only the radiating element and the sensing element. In this case, N is a positive integer greater than or equal to 2. Alternatively, the N terminal elements may include only the radiating and sensing fusion element. In this case, N is a positive integer. Alternatively, the N terminal elements may not only include the radiating and sensing fusion element, but also include at least one of the radiating element and the sensing element. In this case, N is a positive integer greater than or equal to 2. It may be understood that when the N terminal elements include at least two radiating and sensing fusion elements, any two radiating and sensing fusion elements may include a same quantity of radiating elements and a same quantity of sensing elements, or may include different quantities of radiating elements and/or different quantities of sensing elements. This is not specifically limited.

For ease of describing the solution, the radiating and sensing fusion element is briefly referred to as a fusion element below.

It may be understood that, a quantity of radiating elements, a quantity of sensing elements, and a quantity of fusion elements that are specifically included in the N terminal elements may be determined based on a quantity of radiating elements and a quantity of sensing elements that need to be deployed in a current environment. For example, when one radiating element and one sensing element are fused in each fusion element, if 10 radiating elements and five sensing elements need to be deployed in the current environment, the N terminal elements may include 10 radiating elements and five sensing elements, or may include five radiating elements and five fusion elements, or may include seven radiating elements, three fusion elements, and two sensing elements, and the like. Examples are not enumerated herein.

Still as shown in FIG. 2, in an information sending scenario, the signal processing unit 210 may send a radio frequency transmit signal and/or a sensing request signal to the N terminal elements. For example, the radio frequency transmit signal and/or the sensing request signal may be sent to each of the N terminal elements, to indicate, in a polling manner, a corresponding terminal element to receive and respond to the signal. Alternatively, the radio frequency transmit signal may be directly sent to a corresponding radiating element or fusion element in the N terminal elements, and the sensing request signal may be directly sent to a corresponding sensing element or fusion element in the N terminal elements, to directly indicate a corresponding terminal element to respond to the signal.

Optionally, after receiving the radio frequency transmit signal, the radiating element or the fusion element in the N terminal elements may convert the radio frequency transmit signal into a radio electromagnetic wave signal, and then send the radio electromagnetic wave signal to air. After receiving the sensing request signal, the sensing element or the fusion element in the N terminal elements may respond based on an indication of the sensing request signal. For example, when the sensing element is a sensor module, the sensor module may return, based on the indication of the sensing request signal, a sensor signal acquired in a period of time; or adjust, based on the indication of the sensing request signal, an acquisition frequency of a sensor signal; or adjust, based on the indication of the sensing request signal, a periodicity in which the sensor module sends a sensor signal to the signal processing unit 210, and the like. Examples are not enumerated herein.

On the contrary, in an information receiving scenario, the signal processing unit 210 may receive a radio frequency receive signal sent by the radiating element in the N terminal elements, may receive a sensing-acquired signal sent by the sensing element in the N terminal elements, and may receive a radio frequency receive signal and/or a sensing-acquired signal sent by the fusion element in the N terminal elements. The radio frequency receive signal may be, for example, obtained by performing electro-optical conversion after the radiating element or the fusion element receives a radio electromagnetic wave signal propagated in the air. The sensing-acquired signal may be, for example, a sensor signal that is acquired in a period of time and that is returned by the sensing element or the fusion element, a signal indicating whether an acquisition frequency is successfully adjusted, or a signal indicating whether a periodicity is successfully adjusted.

In the system architecture shown in FIG. 2, the radiating element and the sensing element are integrated into one feeding network, to not only complete deployment of two systems of an antenna system and a sensing system at one time, thereby reducing labor costs, but also reuse a receive/transmit link in a same feeding network to complete information transmission of the two systems of the antenna system and the sensing system, thereby reducing material costs. In this way, a fusion system of the antenna system and the sensing system is designed, to help implement a low-cost deployment solution of the antenna system and the sensing system.

In a possible implementation, still as shown in FIG. 2, the N terminal elements may be distributed on T radio frequency cables, and the signal processing unit 210 may include T second interfaces such as a second interface C₁, a second interface C₂, ..., and a second interface C_{T} connected to the T radio frequency cables in one-to-one correspondence, where T is a positive integer. In the information sending scenario, the signal processing unit 210 may send, through any second interface, the radio frequency transmit signal and/or the sensing request signal to a radio frequency cable connected to the second interface, and then transmit, through the radio frequency cable, the radio frequency transmit signal and/or the sensing request signal to each terminal element or a corresponding terminal element disposed on the radio frequency cable. However, in the information receiving scenario, a radio frequency receive signal and/or a sensing-acquired signal sent by any terminal element may be transmitted, through a radio frequency cable on which the terminal element is located, to a second interface connected to the radio frequency cable, and then transmitted to the signal processing unit 210 through the second interface. In this implementation, the N terminal elements are disposed in a distributed manner through the T radio frequency cables, so that communication between the signal processing unit 210 and the N terminal elements can be evenly distributed on different radio frequency cables. This reduces communication pressure in a case of distributing the N terminal elements on one radio frequency cable.

It may be understood that, in this application, types and a quantity of terminal elements distributed on each radio frequency cable are not limited. For example, in FIG. 2, that six terminal elements are distributed on each radio frequency cable, where a fusion element is distributed on one radio frequency cable, and a radiating element and a sensing element are distributed on another radio frequency cable is used as an example. However, this is only an optional solution. In actual deployment, a same quantity of terminal elements may be distributed on all radio frequency cables; or different quantities of terminal elements may be distributed on all radio frequency cables; or a same quantity of terminal elements may be distributed on a part of radio frequency cables, and different quantities of terminal elements may be distributed on the other part of radio frequency cables. In addition, terminal elements on any radio frequency cable may be all disposed as radiating elements; or may be all disposed as sensing elements; or may be all disposed as fusion elements; or may be partially disposed as radiating elements and partially disposed as sensing elements; or may be partially disposed as radiating elements and partially disposed as fusion elements; or may be partially disposed as sensing elements and partially disposed as fusion elements; or may be partially disposed as radiating elements, partially disposed as sensing elements, and partially disposed as fusion elements. This is not specifically limited.

In a possible implementation, still as shown in FIG. 2, the fusion system may further include a baseband unit 220, and the baseband unit 220 is connected to the signal processing unit 210, for example, connected to a first interface IN of the signal processing unit 210 through an optical fiber. In the signal sending scenario, the baseband unit 220 may send the radio frequency transmit signal to the first interface IN, to send the radio frequency transmit signal to the signal processing unit 210. In the signal receiving scenario, after receiving the radio frequency receive signal from the radiating element or the fusion element in the N terminal elements, the signal processing unit 210 may send the radio frequency receive signal to the baseband unit 220 through the first interface IN, so that the baseband unit 220 performs subsequent processing on the radio frequency receive signal. It can be learned that, the baseband unit is disposed to be connected to the signal processing unit, to implement a communication connection between the baseband unit and the radiating element or the fusion element in the terminal element through the signal processing unit, and implement a receiving/sending operation of a radio frequency signal.

It may be understood that, because the optical fiber transmits a digital signal and the terminal element may receive an analog signal, after receiving the radio frequency transmit signal from the baseband unit 220, the signal processing unit 210 may further perform digital-to-analog conversion on the radio frequency transmit signal, and then send, to the terminal element, a radio frequency transmit signal obtained through digital-to-analog conversion. Alternatively, after receiving the radio frequency receive signal from the radiating element or the fusion element, the signal processing unit 210 may further perform analog-to-digital conversion on the radio frequency receive signal, and then send, to the baseband unit 220, a radio frequency receive signal obtained through analog-to-digital conversion. In this way, the baseband unit and the terminal element can receive a signal in a signal format that can be parsed by the baseband unit and the terminal element.

In a further possible implementation, still as shown in FIG. 2, the fusion system may further include a network management device 230. The network management device 230 may be connected to the baseband unit 220 through any type of full-duplex communication bus. The full-duplex communication bus may be, for example, a universal asynchronous receiver/transmitter (universal asynchronous receiver/transmitter, UART) bus, an inter-integrated circuit (inter-integrated circuit, I2C) bus, or a serial peripheral interface (serial peripheral interface, SPI) bus. In the signal sending scenario, the network management device 230 may send the sensing request signal to the baseband unit 220. After receiving the sensing request signal, the baseband unit 220 may send the sensing request signal to the signal processing unit 210 by sending the sensing request signal to the first interface IN. In the signal receiving scenario, after receiving the sensing-acquired signal from the sensing element or the fusion element in the N terminal elements, the signal processing unit 210 may send the sensing-acquired signal to the baseband unit 220 through the first interface IN, and then the baseband unit 220 forwards the sensing-acquired signal to the network management device 230. In this way, the network management device is disposed to be connected to the baseband unit, to implement a communication connection between the network management device and the sensing element or the fusion element in the terminal element through the baseband unit and the signal processing unit, and implement a receiving/sending operation of a sensing signal.

It may be understood that, the radiating and sensing fusion system may be considered as a new system obtained by integrating the sensing element in an existing antenna system. In other words, the T radio frequency cables, the baseband unit 220, and the optical fiber configured to connect the baseband unit 220 and the signal processing unit 210 may be considered as existing content in a feeding network of the existing antenna system; the network management device 230 may be considered as a newly added component in the feeding network of the existing antenna system; and the signal processing unit 210 may be considered as a component obtained by improving a radio frequency unit in the feeding network of the existing antenna system, or may be considered as a component integrated with the radio frequency unit in the feeding network of the existing antenna system. In this way, the feeding network of the existing antenna system is reused, and an antenna function and a sensing function can be integrated together merely by making some small hardware changes and function changes to the feeding network, to implement an arrangement of the fusion system. There is no need to re-develop a system or re-arrange a system from scratch. In this way, labor costs can be further reduced, and applicability of a new system can be improved.

In a possible implementation, after the sensing element is integrated into the feeding network of the existing antenna system, because a quantity of terminal elements in the feeding network increases or a specification of the fusion element into which the sensing element and the radiating element are integrated becomes larger, there is a high probability that an original power supply capability of the feeding network cannot meet a requirement of the terminal element in the integrated feeding network. To resolve a power supply problem of the integrated feeding network, this application further provides an external power supply solution. Still as shown in FIG. 2, the fusion system may further include a power supply 240, and the signal processing unit 210 may further include a power interface P. The power supply 240 is connected to the power interface P. After the system is powered on, the power supply 240 may output a direct-current power supply signal to the power interface P. After receiving the direct-current power supply signal through the power interface P, the signal processing unit 210 may transmit the direct-current power supply signal to the T radio frequency cables through the T second interfaces C₁ to C_{T}, to evenly provide the direct-current power supply signal to the terminal elements on each radio frequency cable. In this way, an external power supply is disposed to supply power to the integrated terminal element, so that more terminal elements can be disposed in the fusion system, and the radiating element and the sensing element can also be integrated into one fusion element in the fusion system. For example, it is found through an experimental test that, based on the original power supply capability of the existing antenna system, approximately only three to six radiating elements can be arranged on one radio frequency cable. After the external power supply is disposed, electric energy provided by combining the original power supply capability and the external power supply can support an arrangement of 20 to 30 fusion elements on one radio frequency cable. This greatly increases a quantity of terminal elements that may be arranged on each radio frequency cable.

The foregoing content describes functions of some functional components in FIG. 2. The following describes structures of the functional components shown in FIG. 2, to provide an example specific implementation solution.

### 1. Signal processing unit

In a possible implementation, the signal processing unit 210 has signal combination and signal transmission functions. For example, the signal processing unit 210 may receive the radio frequency transmit signal from the baseband unit 220, the sensing request signal that is from the network management device 230 and that is forwarded by the baseband unit 220, and the direct-current power supply signal from the power supply 240, and may transmit the three classes of signals to the terminal element on each radio frequency cable; and the signal processing unit 210 may further receive the radio frequency receive signal sent by the radiating element on each radio frequency cable, the sensing-acquired signal sent by the sensing element on each radio frequency cable, and the radio frequency receive signal and the sensing-acquired signal sent by the fusion element on each radio frequency cable, and may transmit the two classes of signals to the baseband unit 220. The signal processing unit that can implement the function has a plurality of possible structures. The following describes two example possible structures of the signal processing unit.

### Implementation solution 1: The signal processing unit includes a radio frequency unit and a signal bias unit.

In a possible implementation, the signal processing unit 210 may include a radio frequency unit and a signal bias unit. A structure of the radio frequency unit is the same as a structure of the radio frequency unit in the feeding network of the existing antenna system, and is configured to implement a radio frequency receiving/sending function and a sensing receiving/sending function. The signal bias unit is a newly added unit in the feeding network of the existing antenna system, and is configured to implement a direct-current power supply function and a signal combination function.

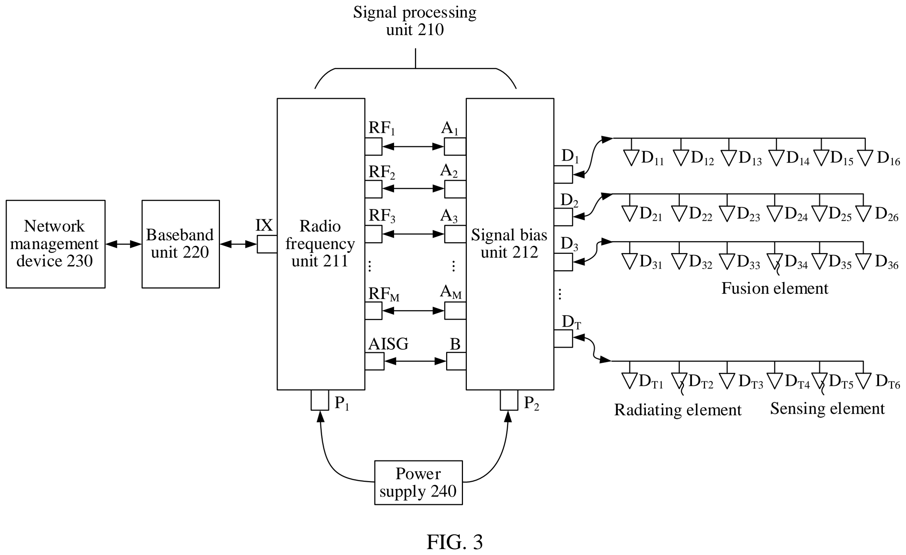

FIG. 3 is a diagram of an example specific structure of a radiating and sensing fusion system according to this application. In this example, the signal processing unit 210 includes a radio frequency unit 211 and a signal bias unit 212, and the signal bias unit 212 is separately connected to the radio frequency unit 211 and the N terminal elements. In the signal sending scenario, the radio frequency unit 211 may send the radio frequency transmit signal and/or the sensing request signal to the signal bias unit 212, and the signal bias unit 212 sends the radio frequency transmit signal and/or the sensing request signal to the N terminal elements. In the signal receiving scenario, the signal bias unit 212 may receive the radio frequency receive signal and/or the sensing-acquired signal from the N terminal elements, and may send the radio frequency receive signal and/or the sensing-acquired signal to the radio frequency unit 211.

Optionally, still as shown in FIG. 3, the radio frequency unit 211 may be further connected to the baseband unit 220, and the signal bias unit 212 may be further connected to the N terminal elements through the T radio frequency cables. In the signal sending scenario, the radio frequency unit 211 may receive the radio frequency transmit signal from the baseband unit 220 and/or the sensing request signal that is from the network management device 230 and that is forwarded by the baseband unit 220, and may send the radio frequency transmit signal and/or the sensing request signal to the signal bias unit 212. The signal bias unit 212 may send the radio frequency transmit signal and/or the sensing request signal to the T radio frequency cables, and transmit the radio frequency transmit signal and/or the sensing request signal to the N terminal elements through the T radio frequency cables. In the signal receiving scenario, the signal bias unit 212 may receive the radio frequency receive signal sent by the radiating element in the N terminal elements, the sensing-acquired signal sent by the sensing element in the N terminal elements, and the radio frequency receive signal and/or the sensing-acquired signal sent by the fusion element in the N terminal elements, and may send the radio frequency receive signal and/or the sensing-acquired signal to the radio frequency unit 211. The radio frequency unit 211 may forward the radio frequency receive signal and/or the sensing-acquired signal to the baseband unit 220. The sensing-acquired signal may be further forwarded by the baseband unit 220 to the network management device 230.

Optionally, as shown in FIG. 2 and FIG. 3 together, the radio frequency unit 211 may include a first interface IX, and the first interface IX may be the interface IN of the signal processing unit 210, or may be connected to the interface IN of the signal processing unit 210 through a line. The radio frequency unit 211 may implement a signal receiving/sending operation with the baseband unit 220 through the first interface IX. For example, in the signal sending scenario, the radio frequency unit 211 may receive, through the first interface IN, the radio frequency transmit signal from the baseband unit 220 and/or the sensing request signal that is from the network management device 230 and that is forwarded by the baseband unit 220. In the signal receiving scenario, the radio frequency unit 211 may forward the radio frequency receive signal and/or the sensing-acquired signal from the signal bias unit 212 to the baseband unit 220 through the first interface IN.

Optionally, as shown in FIG. 3, the radio frequency unit 211 may include M radio frequency interfaces such as a radio frequency interface RF₁, a radio frequency interface RF₂, ..., and a radio frequency interface RF_{M} shown in the figure. The signal bias unit 212 may include M first interfaces, such as a first interface A₁, a first interface A₂, ..., and a first interface A_{M} shown in the figure, connected to the M radio frequency interfaces RF₁ to RF_{M} in one-to-one correspondence. The radio frequency unit 211 and the signal bias unit 212 may implement a receiving/sending operation of a radio frequency signal through the M radio frequency interfaces RF₁ to RF_{M} and the M first interfaces A₁ to A_{M}. For example, in the signal sending scenario, the radio frequency unit 211 may send the radio frequency transmit signal from the baseband unit 220 to the M first interfaces A₁ to A_{M} of the signal bias unit 212 through the M radio frequency interfaces RF₁ to RF_{M}, to transmit the radio frequency transmit signal to the signal bias unit 212. In the signal receiving scenario, the signal bias unit 212 may send radio frequency receive signals from the radiating element and the fusion element in the N terminal elements to the M radio frequency interfaces RF₁ to RF_{M} of the radio frequency unit 211 through the M first interfaces A₁ to A_{M}, to transmit the radio frequency receive signal to the radio frequency unit 211.

Optionally, as shown in FIG. 2 and FIG. 3 together, the radio frequency unit 211 may further include a sensing interface (AISG), the signal bias unit 212 may further include a second interface B, and the second interface B is connected to the sensing interface AISG. The radio frequency unit 211 and the signal bias unit 212 may implement a receiving/sending operation of a sensing signal through the sensing interface AISG and the second interface B. For example, in the signal sending scenario, the radio frequency unit 211 may send the sensing request signal from the baseband unit 220 to the second interface B of the signal bias unit 212 through the sensing interface AISG, to transmit the sensing request signal to the signal bias unit 212. In the signal receiving scenario, the signal bias unit 212 may send a sensing-acquired signal from the sensing element and the fusion element in the N terminal elements to the sensing interface AISG of the radio frequency unit 211 through the second interface B, to transmit the sensing-acquired signal to the radio frequency unit 211.

Optionally, as shown in FIG. 2 and FIG. 3 together, the signal bias unit 212 may further include T third interfaces such as a third interface D₁, a third interface D₂, a third interface D₃, ..., and a third interface D_{T} shown in the figure. The T third interfaces D₁ to D_{T} may be the T second interfaces C₁ to C_{T} of the signal processing unit 210, or may be connected to the T second interfaces C₁ to C_{T} of the signal processing unit 210 in one-to-one correspondence through lines. The signal bias unit 212 may implement a receiving/sending operation of a radio frequency signal and a sensing signal through the T third interfaces D₁ to D_{T}. For example, in the signal sending scenario, the signal bias unit 212 may send the radio frequency transmit signal and/or the sensing request signal from the baseband unit 220 to the T radio frequency cables through the T third interfaces D₁ to D_{T}, to transmit the radio frequency transmit signal and/or the sensing request signal to the N terminal elements. In the signal receiving scenario, the signal bias unit 212 may receive a radio frequency receive signal and a sensing-acquired signal from the N terminal elements through the T third interfaces D₁ to D_{T}, and may forward the radio frequency receive signal and the sensing-acquired signal to the radio frequency unit 211.

Optionally, as shown in FIG. 2 and FIG. 3 together, the radio frequency unit 211 may further include a power interface P₁, and the power interface P₁ may be connected to the power interface P of the signal processing unit 210 through a line, to implement a connection to the power supply 240. The radio frequency unit 211 may receive, through the power interface P₁, the direct-current power supply signal output by the power supply 240, and may drive, by using the direct-current power supply signal, a remote electrical tilt device located on a radio frequency cable, to support the remote electrical tilt device to adjust an angle of a radiating element located on the radio frequency cable, so that the radiating element receives/sends a signal at a good angle. In some embodiments, in consideration that the AISG interface of the radio frequency unit in the existing antenna system is configured to receive/send an electronic adjustment signal, the power interface P₁ may be further connected to the AISG interface of the radio frequency unit 211, so that the direct-current power supply signal provided by the power supply 240 is carried in the electronic adjustment signal through the AISG interface and sent to the remote electrical tilt device together.

Optionally, as shown in FIG. 2 and FIG. 3 together, the signal bias unit 212 may further include a power interface P₂, and the power interface P₂ may be connected to the power interface P of the signal processing unit 210 through a line, to implement a connection to the power supply 240. The signal bias unit 212 may receive, through the power interface P₂, the direct-current power supply signal output by the power supply 240, and may provide the direct-current power supply signal for the N terminal elements. For example, the direct-current power supply signal may be sent to the T radio frequency cables, to transmit the direct-current power supply signal to the N terminal elements on the T radio frequency cables. In this way, although the radio frequency unit 211 in the original antenna system can provide only a limited power to drive a remote electrical tilt device connected to a radio frequency cable, and energy provided by the radio frequency unit 211 cannot simultaneously support a plurality of terminal elements connected to the radio frequency cable, all radio frequency cables can obtain enough direct current energy through the signal bias unit 212 by introducing the direct-current power supply signal provided by the power supply 240 into the signal bias unit 212, to drive all the terminal elements connected to the radio frequency cable. Further, the sensing element additionally integrated on each radio frequency cable can also have enough direct current energy to drive the sensing element to operate.

The foregoing describes an interface connection relationship between the radio frequency unit 211 and the signal bias unit 212. The following describes an internal circuit structure of the signal bias unit 212. It should be noted that, because an internal circuit structure of the radio frequency unit 211 is the same as an internal circuit structure of the radio frequency unit in the existing antenna system, for the internal circuit structure of the radio frequency unit 211, directly refer to the conventional technology. Details are not described again in this application.

It may be understood that an internal circuit of the signal bias unit 212 needs to be set based on a class of a signal that can be parsed by the baseband unit 220 and the terminal element that interact with the signal bias unit 212. For example, in some scenarios, radio frequency signals, for example, the radio frequency transmit signal and the radio frequency receive signal, exchanged between the signal bias unit 212 and each of the baseband unit 220 and the terminal element are high-frequency alternating-current signals; sensing signals, for example, the sensing request signal and the sensing-acquired signal, exchanged between the signal bias unit 212 and the baseband unit 220 are differential signals; and sensing signals, for example, the sensing request signal and the sensing-acquired signal, exchanged between the signal bias unit 212 and the terminal element are low-frequency alternating-current signals. A signal, for example, a direct-current power supply signal, exchanged between the signal bias unit 212 and the power supply 240 is a direct-current signal. Therefore, based on a class of each exchanged signal in this scenario, the signal bias unit 212 needs to filter a signal transmitted by the baseband unit 220, the terminal element, or the power supply 240, so that a signal sent by the signal bias unit 212 can be successfully parsed by the terminal element or the baseband unit 220.

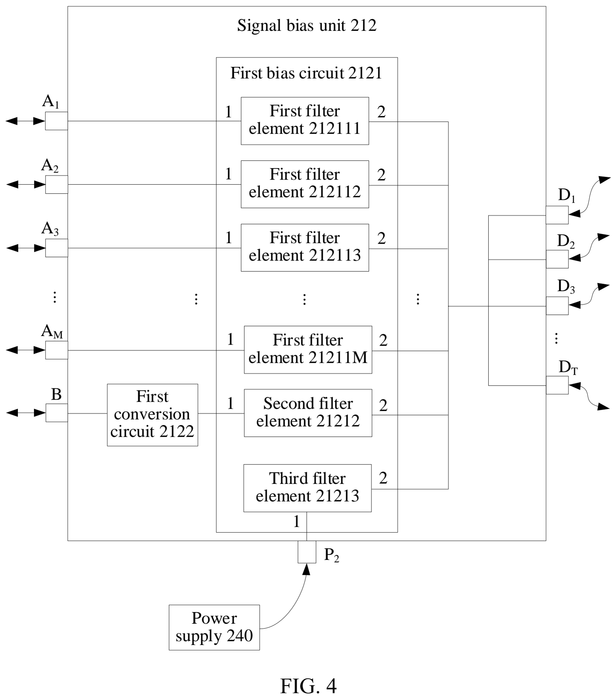

FIG. 4 is a diagram of an example structure of a signal bias unit according to this application. In this example, the signal bias unit 212 may include a first bias circuit 2121. The first bias circuit 2121 includes a second filter element 21212, a third filter element 21213, and at least one first filter element, for example, M first filter elements shown in the figure: a first filter element 212111, a first filter element 212112, a first filter element 212113, ..., and a first filter element 21211M. First terminals of the M first filter elements 212111 to 21211M are configured to receive the radio frequency transmit signal and send the radio frequency receive signal, for example, may receive, by being connected to the M first interfaces A₁ to A_{M} of the signal bias unit 212 in one-to-one correspondence, the radio frequency transmit signal sent by the baseband unit 220 to the M first interfaces A₁ to A_{M}, and send the radio frequency receive signal to the baseband unit 220 through the M first interfaces A₁ to A_{M}. A first terminal of the second filter element 21212 is configured to receive the sensing request signal and send the sensing-acquired signal, for example, may receive, by being connected to the second interface B of the signal bias unit 212, the sensing request signal sent by the baseband unit 220 to the second interface B, and send the sensing-acquired signal to the baseband unit 220 through the second interface B. A first terminal of the third filter element 21213 is configured to receive the direct-current power supply signal, for example, may receive, by being connected to the power interface P₂ of the signal bias unit 212, the direct-current power supply signal sent by the power supply 240 to the power interface P₂. Second terminals of the M first filter elements 212111 to 21211M, a second terminal of the second filter element 21212, and a second terminal of the third filter element 21213 are connected and then connected to the N terminal elements. For example, after being connected, the second terminals of the filter elements are divided into T branches, and the T branches are connected to the T interfaces D₁ to D_{T} of the signal bias unit 212 in one-to-one correspondence, to implement a connection to the N terminal elements on the T radio frequency cables.

In the first bias circuit 2121, the M first filter elements 212111 to 21211M may be configured to filter out a direct-current signal and a low-frequency alternating-current signal in an input signal, the second filter element 21212 may be configured to filter out a direct-current signal and a high-frequency alternating-current signal in an input signal, and the third filter element 21213 may be configured to filter out an alternating-current signal in an input signal, so that a signal transmitted by the first bias circuit 2121 is pure. Examples are as follows:

In the signal sending scenario, the radio frequency transmit signal is a high-frequency alternating-current signal. After the M first filter elements 212111 to 21211M receive a radio frequency transmit signal sent by the radio frequency unit 211 to the M first interfaces A₁ to A_{M} of the signal bias unit 212, even if the radio frequency transmit signal is impure, the M first filter elements 212111 to 21211M can filter out a direct-current signal and a low-frequency alternating-current signal in the impure signal, so that a pure radio frequency transmit signal is transmitted to the N terminal elements through the M first filter elements 212111 to 21211M. In addition, in the signal sending scenario, the sensing request signal is a low-frequency signal. After the second filter element 21212 receives a sensing request signal sent by the radio frequency unit 211 to the second interface B of the signal bias unit 212, even if the sensing request signal is impure, the second filter element 21212 can filter out a direct-current signal and a high-frequency alternating-current signal in the impure signal, so that a pure sensing request signal is transmitted to the N terminal elements through the second filter element 21212. In addition, in the signal sending scenario, the direct-current power supply signal is a direct-current signal. After the third filter element 21213 receives a direct-current power supply signal sent by the power supply 240 to the power interface P₂ of the signal bias unit 212, even if the direct-current power supply signal is impure, the third filter element 21213 can filter out an alternating-current signal in the impure signal, so that a pure direct-current power supply signal is transmitted to the N terminal elements through the third filter element 21213.

In the signal receiving scenario, the radio frequency receive signal is a high-frequency alternating-current signal. After the M first filter elements 212111 to 21211M receive a radio frequency receive signal sent by the radiating element or the fusion element in the N terminal elements to the third interfaces D₁ to D_{T} of the signal bias unit 212, even if the radio frequency receive signal is impure, the M first filter elements 212111 to 21211M can filter out a direct-current signal and a low-frequency alternating-current signal in the impure signal, so that a pure radio frequency receive signal is transmitted to the radio frequency unit 211 through the M first filter elements 212111 to 21211M. In addition, in the signal receiving scenario, the sensing-acquired signal is a low-frequency alternating-current signal. After the second filter element 21212 receives a sensing-acquired signal sent by the sensing element or the fusion element in the N terminal elements to the third interfaces D₁ to D_{T} of the signal bias unit 212, even if the sensing-acquired signal is impure, the second filter element 21212 can filter out a direct-current signal and a high-frequency alternating-current signal in the impure signal, so that a pure sensing-acquired signal is transmitted to the radio frequency unit 211 through the first filter element 21211.

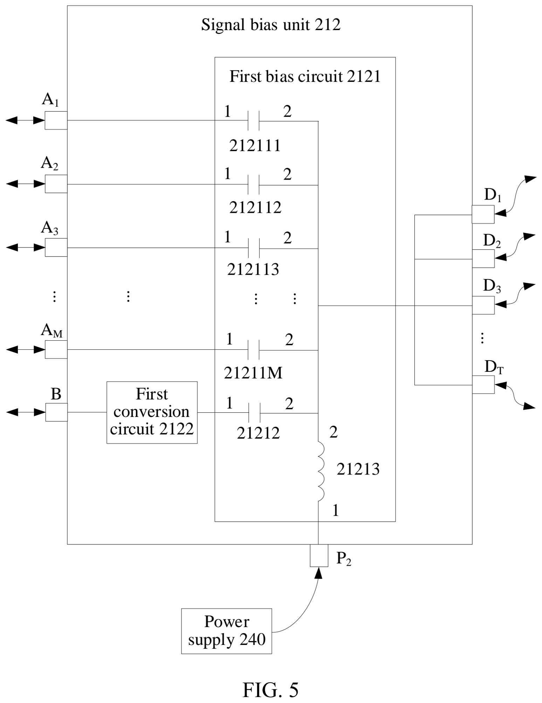

It may be understood that the first filter elements 212111 to 21211M may be any filter component or a combination element of any plurality of filter components that can allow the high-frequency alternating-current signal to pass and disallow a signal other than the high-frequency alternating-current signal to pass, the second filter element 21212 may be any filter component or a combination element of any plurality of filter components that can allow the low-frequency alternating-current signal to pass and disallow a signal other than the low-frequency alternating-current signal to pass, and the third filter element 21213 may be any filter component or a combination element of any plurality of filter components that allow the direct-current signal to pass and disallow the alternating-current signal to pass. Optionally, FIG. 5 is a diagram of an example specific structure of a first bias circuit according to this application. In the figure, for example, the M first filter elements 212111 to 21211M and the second filter element 21212 are capacitors and the third filter element 21213 is an inductor. In this way, a characteristic "passing an alternating current and blocking a direct current" of the capacitor is used. Capacitor bandpass frequencies of the M first filter elements 212111 to 21211M are set to high frequencies, to obtain a pure high-frequency alternating-current radio frequency transmit signal and a pure high-frequency alternating-current radio frequency receive signal through filtering; and a capacitor bandpass frequency of the second filter element 21212 is set to a low frequency, to obtain a pure low-frequency alternating-current sensing request signal and a pure low-frequency alternating-current sensing-acquired signal through filtering. In addition, a characteristic "passing a direct current and blocking an alternating current" of the inductor can be used, to obtain a pure direct-current power supply signal through filtering.

Optionally, a signal that can be received/sent by the network management device 230 is usually a differential signal, for example, a 485 differential signal, and a signal that can be received/sent by the sensing element is usually a low-frequency alternating-current signal, for example, an OOK signal. In this case, as a transit node between the network management device 230 and the sensing element, the signal bias unit 212 further needs to perform signal class conversion on the signal received/sent by the network management device 230 and the signal received/sent by the sensing element, so that the network management device 230 and the sensing element can communicate successfully. Optionally, still as shown in FIG. 4, the signal bias unit 212 may further include a first conversion circuit 2122, a first interface of the first conversion circuit 2122 is connected to the second interface B of the signal bias unit 212, and a second interface of the first conversion circuit 2122 is connected to the first terminal of the second filter element 21212. In the signal sending scenario, the first conversion circuit 2122 may receive a sensing request signal that is in a differential signal form and that is forwarded by the radio frequency unit 211 to the second interface B of the signal bias unit 212, convert the sensing request signal in the differential signal form into a sensing request signal in a low-frequency alternating-current signal form, and then send the sensing request signal in the low-frequency alternating-current signal form to the second filter element 21212. Further, the second filter element 21212 filters out a direct-current signal and a high-frequency alternating-current signal in the sensing request signal in the low-frequency alternating-current signal form, and then sends a sensing request signal obtained through filtering to the N terminal elements. In the signal receiving scenario, a sensing-acquired signal sent by the sensing element or the fusion element in the N terminal elements is filtered by the second filter element 21212, and then becomes a pure sensing-acquired signal in a low-frequency alternating-current signal form. Then, the pure sensing-acquired signal in the low-frequency alternating-current signal form is sent to the first conversion circuit 2122. The first conversion circuit 2122 converts the sensing-acquired signal in the low-frequency alternating-current signal form into a sensing-acquired signal in a differential signal form, and then sends the sensing-acquired signal in the differential signal form to the radio frequency unit 211 through the second interface B of the signal bias unit 212. In this way, the first conversion circuit converts a class of a signal sent by the network management device into a class of a signal received by the sensing element, and converts a class of a signal sent by the sensing element into a class of a signal received by the network management device, so that the network management device and the sensing element can communicate smoothly.

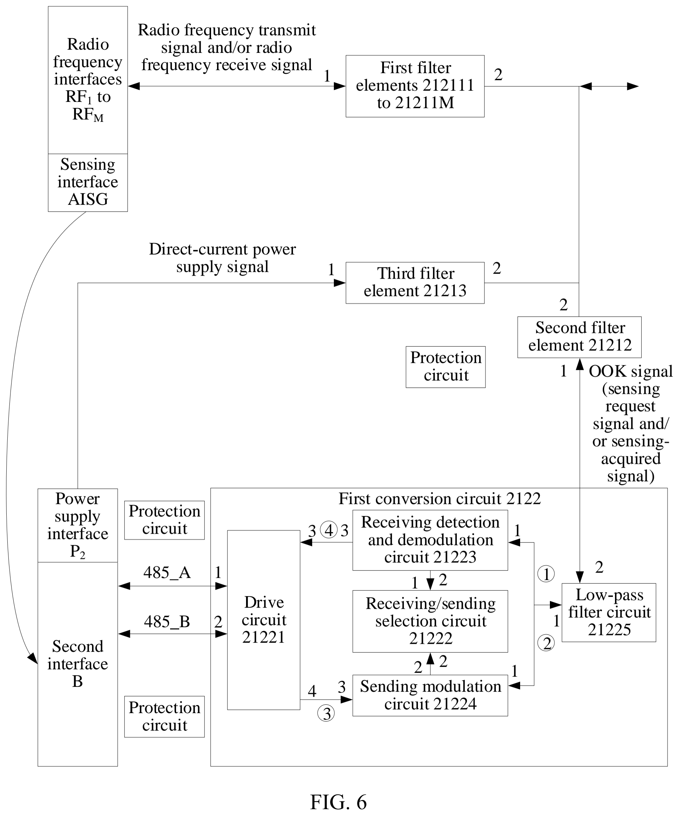

It may be understood that the first conversion circuit 2122 may be any component or any combination of components that can implement mutual conversion between the differential signal and the low-frequency alternating-current signal. For example, FIG. 6 is a diagram of an example specific structure of a first conversion circuit according to this application. In the figure, for example, the first conversion circuit 2122 converts a 485 signal and an OOK signal. Optionally, the first conversion circuit 2122 may include a drive circuit 21221, a receiving/sending selection circuit 21222, a receiving detection and demodulation circuit 21223, a sending modulation circuit 21224, and a low-pass filter circuit 21225. Both an interface 1 and an interface 2 of the drive circuit 21221 are connected to the second interface B of the signal bias unit 212, an interface 3 of the drive circuit 21221 is connected to an interface 3 of the receiving detection and demodulation circuit 21223, an interface 4 of the drive circuit 21221 is connected to an interface 3 of the sending modulation circuit 21224, an interface 1 of the receiving detection and demodulation circuit 21223 and an interface 1 of the sending modulation circuit 21224 are connected and then connected to an interface 1 of the low-pass filter circuit 21225, an interface 2 of the receiving detection and demodulation circuit 21223 is connected to an interface 1 of the receiving/sending selection circuit 21222, an interface 2 of the receiving/sending selection circuit 21222 is connected to an interface 2 of the sending modulation circuit 21224, and an interface 2 of the low-pass filter circuit 21225 is connected to an interface 1 of the second filter element 21212.

As shown in FIG. 3 and FIG. 6 together, in the signal sending scenario, the drive circuit 21221 may receive, through the interface 1 of the drive circuit 21221 and the interface 2 of the drive circuit 21221, sensing request signals, for example, a 485_A signal and a 485_B signal, in a differential signal form that are sent by the radio frequency unit 211 to the second interface B of the signal bias unit 212. The drive circuit 21221 may convert the sensing request signal in the differential signal form into a sensing request signal in an OOK form, and may send the sensing request signal in the OOK form to the sending modulation circuit 21224 through the interface 4 of the drive circuit 21221. The sending modulation circuit 21224 may modulate the sensing request signal in the OOK form from the drive circuit 21221, and may send a notification message to the receiving/sending selection circuit 21222 through the interface 2 of the sending modulation circuit 21224, to notify the receiving/sending selection circuit 21222 that a current scenario is a sending scenario. The receiving/sending selection circuit 21222 chooses, based on the notification message of the sending scenario, to disconnect a receive link, for example, disconnect a line ① between the low-pass filter circuit 21225 and the receiving detection and demodulation circuit 21223. The sending modulation circuit 21224 may further send a modulated sensing request signal through the interface 1 of the sending modulation circuit 21224. Because a line ② between the low-pass filter circuit 21225 and the sending modulation circuit 21224 is not disconnected, the modulated sensing request signal may be transmitted to the low-pass filter circuit 21225. The low-pass filter circuit 21225 filters an input signal from the sending modulation circuit 21224, allows a low-frequency alternating-current signal in the input signal to pass, and blocks a high-frequency alternating-current signal and a direct-current signal in the input signal, so that a pure sensing request signal in a low-frequency alternating current form is transmitted to the second filter element 21212. Further, the second filter element 21212 filters out the high-frequency alternating-current signal and the direct-current signal again, to obtain a very pure sensing request signal. The pure sensing request signal, the pure radio frequency transmit signal from the M first filter elements 212111 to 21211M, and the pure direct-current power supply signal from the third filter element 21213 are sent to the N terminal elements together.

As shown in FIG. 3 and FIG. 6 together, in the signal receiving scenario, the low-pass filter circuit 21225 may receive a sensing-acquired signal obtained through first time of filtering by the second filter element 21212, and may perform second time of filtering on the sensing-acquired signal, to further filter out a high-frequency alternating-current signal and a direct-current signal in the sensing-acquired signal, so as to obtain a very pure sensing-acquired signal in a low-frequency alternating current form. Then, the sensing-acquired signal in the low-frequency alternating current form may be sent to the receiving detection and demodulation circuit 21223 through the line ① between the low-pass filter circuit 21225 and the receiving detection and demodulation circuit 21223. The receiving detection and demodulation circuit 21223 may demodulate the sensing-acquired signal from the low-pass filter circuit 21225, and may send a notification message to the receiving/sending selection circuit 21222 through the interface 2 of the receiving detection and demodulation circuit 21223, to notify the receiving/sending selection circuit 21222 that a current scenario is a receiving scenario. The receiving/sending selection circuit 21222 may choose, based on the notification message of the receiving scenario, to disconnect a transmit link, for example, disconnect a line ③ between the sending modulation circuit 21224 and the drive circuit 21221. The receiving detection and demodulation circuit 21223 may further send a demodulated sensing-acquired signal through the interface 3 of the receiving detection and demodulation circuit 21223. Because a line ④ between the receiving detection and demodulation circuit 21223 and the drive circuit 21221 is not disconnected, the demodulated sensing-acquired signal may be transmitted to the drive circuit 21221. The drive circuit 21221 may convert the demodulated sensing-acquired signal into a sensing-acquired signal in a differential signal form, and may send the sensing-acquired signal in the differential signal form to the second interface B of the signal bias unit 212 through the interface 1 of the drive circuit 21221 and the interface 2 of the drive circuit 21221. Further, the sensing-acquired signal in the differential signal form is forwarded by the signal bias unit 212 to the sensing interface AISG of the radio frequency unit 211, and then sent to the baseband unit 220 through the sensing interface AISG of the radio frequency unit 211.

It should be noted that FIG. 6 merely provides an example possible structure of the first conversion circuit 2122. Actually, the first conversion circuit 2122 may further include more or fewer components than those shown in the figure. For example, in some embodiments, the first conversion circuit 2122 may not include the low-pass filter circuit 21225. In this case, although the first conversion circuit 2122 does not perform low-pass filtering on a sensing request signal or a sensing-acquired signal, provided that the second filter element 21212 performs low-pass filtering, it can be ensured that the terminal element receives a pure sensing request signal in a low-frequency alternating current form, and it can be ensured that the radio frequency unit 211 receives a pure sensing-acquired signal in a differential signal form. For another example, in some other embodiments, the first conversion circuit 2122 may further include an anti-interference element. The anti-interference element may isolate different components, to prevent a signal transmitted by a component from being affected by another component, and improve signal transmission quality. There are still many possible implementations, which are not enumerated in this application.

Optionally, still as shown in FIG. 6, the signal bias unit 212 may further include one or more protection circuits. In the figure, for example, a plurality of protection circuits are included and the plurality of protection circuits are arranged at different locations of the signal bias unit 212. The protection circuit may include a resistor, an inductor, a capacitor, or another load-type element, and may be used to protect against an abnormal state of a circuit, to protect security of an electronic component in the circuit. For example, in some scenarios, the protection circuit may include a capacitor, and is configured to perform shunt processing on a large transient current generated at a start moment of the circuit, to prevent a sensitive electronic component in the circuit from being broken down or damaged by the large transient current, thereby protecting the sensitive electronic component. For another example, in some other scenarios, the protection circuit may include a control element, and is configured to open a circuit switch in a timely manner when a circuit is short-circuited, to quickly isolate an electronic component, and prevent the electronic component from being damaged by an overcurrent generated by a short circuit. For still another example, in still some other scenarios, the protection circuit may include a resistor, and is configured to provide an overvoltage protection capability. It should be understood that there are still many possible structures and functions of the protection circuit, which are not enumerated herein.

In Implementation solution 1, the signal processing unit includes the radio frequency unit and the signal bias unit. The structure of the radio frequency unit is the same as the structure of the radio frequency unit in the existing antenna system, and the signal bias unit is a new component that is additionally developed and then added to the existing antenna system. In other words, in this solution, the existing radio frequency unit in the existing antenna system can be directly used, and only one adaptation network, namely, the signal bias unit, is introduced, without a need to greatly change the radio frequency unit and the feeding network in the existing antenna system, thereby implementing reuse to a maximum extent. It may be understood that, regardless of a scenario, provided that the antenna system is arranged currently, the newly developed signal bias unit can be added to the antenna system, so that a sensing function is fused in the antenna system. This fusion manner is simple, and only a small change needs to be made to the existing antenna system, without a need to change the structure of the radio frequency unit in the existing antenna system. This helps reduce research and development costs, labor costs, and material costs.

### Implementation solution 2: The signal processing unit is a radio frequency unit.

In another possible implementation, the signal processing unit 210 may be a radio frequency unit. Compared with the radio frequency unit in the existing antenna system, the radio frequency unit has some improvements. In this way, the radio frequency unit not only has a radio frequency receiving/sending function of the radio frequency unit in the existing antenna system, but also has a sensing receiving/sending function, a direct-current power supply function, and a signal combination function.

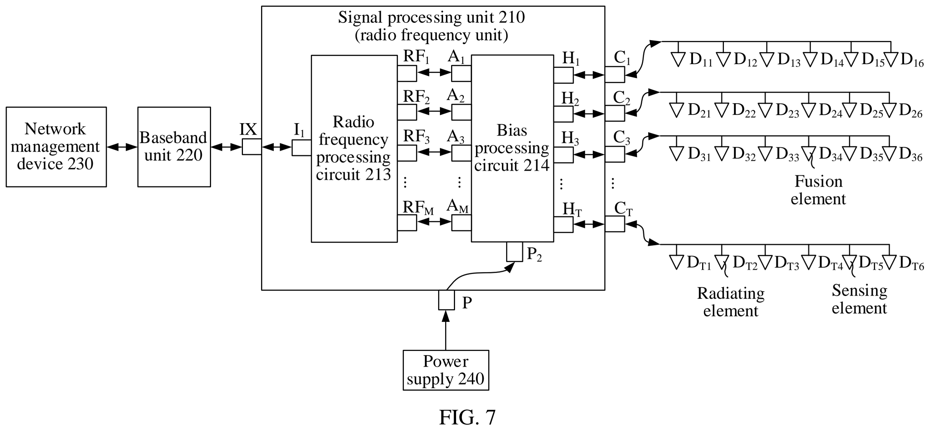

FIG. 7 is a diagram of an example structure of a radio frequency unit according to this application. In this example, the radio frequency unit includes a radio frequency processing circuit 213 and a bias processing circuit 214, the radio frequency processing circuit 213 includes a first interface I₁ and M second interfaces RF₁ to RF_{M}, the bias processing circuit 214 includes M first interfaces A₁ to A_{M} and T second interfaces H₁ to H_{T}, and the M second interfaces RF₁ to RF_{M} of the radio frequency processing circuit 213 are connected to the M first interfaces A₁ to A_{M} of the bias processing circuit 214 in one-to-one correspondence. The first interface I₁ of the radio frequency processing circuit 213 corresponds to a first interface IX of the radio frequency unit. For example, the first interface I₁ of the radio frequency processing circuit 213 is the first interface IX of the radio frequency unit, or the first interface I₁ of the radio frequency processing circuit 213 is connected to the first interface IX of the radio frequency unit through a line. The T second interfaces H₁ to H_{T} of the bias processing circuit 214 correspond to T second interfaces C₁ to C_{T} of the radio frequency unit. For example, the T second interfaces H₁ to H_{T} of the bias processing circuit 214 are the T second interfaces C₁ to C_{T} of the radio frequency unit, or the T second interfaces H₁ to H_{T} of the bias processing circuit 214 are connected to the T second interfaces C₁ to C_{T} of the radio frequency unit in one-to-one correspondence through a line.

In the signal sending scenario, the radio frequency processing circuit 213 may receive the radio frequency transmit signal from the baseband unit 220 and/or the sensing request signal that is from the network management device 230 and that is forwarded by the baseband unit 220, may perform digital-to-analog conversion on the radio frequency transmit signal and/or the sensing request signal, and then send a radio frequency transmit signal and a sensing request signal obtained through digital-to-analog conversion to the M first interfaces A₁ to A_{M} of the bias processing circuit 214 through the M second interfaces RF₁ to RF_{M}; and the bias processing circuit 214 may send the radio frequency transmit signal and the sensing request signal that are obtained through digital-to-analog conversion to the T radio frequency cables through the T second interfaces H₁ to H_{T}, to transmit the radio frequency transmit signal and the sensing request signal to the N terminal elements through the T radio frequency cables. In the signal receiving scenario, the bias processing circuit 214 may receive, through the T second interfaces H₁ to H_{T}, the radio frequency receive signal sent by the radiating element in the N terminal elements, the sensing-acquired signal sent by the sensing element in the N terminal elements, and the radio frequency receive signal and/or the sensing-acquired signal sent by the fusion element in the N terminal elements, and may send the radio frequency receive signal and/or the sensing-acquired signal to the M second interfaces RF₁ to RF_{M} of the radio frequency processing circuit 213 through the M first interfaces A₁ to A_{M}. The radio frequency processing circuit 213 may forward the radio frequency receive signal and/or the sensing-acquired signal to the baseband unit 220 through the first interface I₁. The sensing-acquired signal may be further forwarded by the baseband unit 220 to the network management device 230.

Optionally, still as shown in FIG. 7, the bias processing circuit 214 may further include a power interface P₂, and the power interface P₂ corresponds to the power interface P of the signal processing unit 210. For example, the power interface P₂ is the power interface P of the signal processing unit 210, or the power interface P₂ is connected to the power interface P of the signal processing unit 210 through a line. In the signal sending scenario, in addition to receiving the radio frequency transmit signal and/or the sensing request signal from the radio frequency processing circuit 213, the bias processing circuit 214 may further receive the direct-current power supply signal from the power supply 240, and may send, to the N terminal elements, a mixed signal including one or more of the radio frequency transmit signal, the sensing request signal, and the direct-current power supply signal. It can be learned that, the power interface is configured on the bias processing circuit, so that the bias processing circuit can further transmit the electric energy provided by the external power supply to the terminal element, to supply power to a fused terminal element.

As shown in FIG. 3 and FIG. 7 together, compared with the radio frequency unit (the radio frequency unit 211 shown in FIG. 3) in the existing antenna system, the radio frequency unit in Implementation solution 2 mainly has three changes, and the following separately describes the three changes in detail.

### Change 1

As shown in the radio frequency unit 211 shown in FIG. 3, the radio frequency unit 211 in the existing antenna system includes both the radio frequency interfaces RF₁ to RF_{M} and the sensing interface AISG. A radio frequency signal is transmitted on the radio frequency interfaces RF₁ to RF_{M}, and a sensing signal is transmitted on the sensing interface AISG. A single signal is transmitted on each interface.

As a change, the radio frequency processing circuit 213 shown in FIG. 7 is different from the radio frequency unit 211 in the existing antenna system. In implementation solution 2, the external AISG interface on the original radio frequency unit is removed. In other words, the AISG interface on the original radio frequency unit is not used in a fusion solution. In other words, in Implementation solution 2, both the radio frequency signal and the sensing signal may be transmitted on the radio frequency interfaces RF₁ to RF_{M} of the radio frequency processing circuit 213. A mixed signal is transmitted on the radio frequency interfaces RF₁ to RF_{M}. The mixed signal may not only include a high-frequency alternating-current radio frequency signal, for example, a radio frequency transmit signal and a radio frequency receive signal, but also include a low-frequency alternating-current sensing signal, for example, a sensing request signal and a sensing-acquired signal.

It may be understood that the signal that can be received/sent by the network management device 230 is usually a dual-end signal (for example, a differential signal), and a signal that can be received/sent by the radio frequency interfaces RF₁ to RF_{M} is usually a single-end signal (for example, an alternating-current signal). In this case, the radio frequency processing circuit 213 serves as a transit node between the network management device 230 and the radio frequency interfaces RF₁ to RF_{M}, and a conversion circuit further needs to be disposed inside the radio frequency processing circuit 213, to perform signal class conversion on the signal received/sent by the network management device 230 and the signal received/sent by the radio frequency interfaces RF₁ to RF_{M}, so that the network management device 230 can communicate successfully with the radio frequency interfaces RF₁ to RF_{M}.

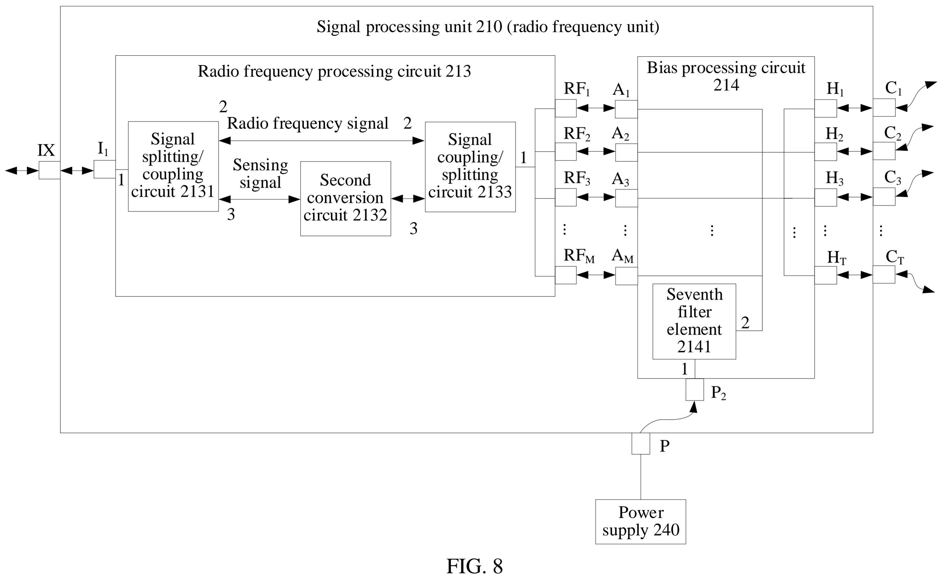

In an example, FIG. 8 is a diagram of an example specific structure of a radio frequency unit according to this application. In this example, the radio frequency processing circuit 213 may include a signal splitting/coupling circuit 2131, a second conversion circuit 2132, and a signal coupling/splitting circuit 2133. A first interface of the signal splitting/coupling circuit 2131 corresponds to a first interface I₁ of the radio frequency processing circuit 213 (for example, the first interface of the signal splitting/coupling circuit 2131 is the first interface I₁ of the radio frequency processing circuit 213, or the first interface of the signal splitting/coupling circuit 2131 is connected to the first interface I₁ of the radio frequency processing circuit 213 through a line), a second interface of the signal splitting/coupling circuit 2131 is connected to a second interface of the signal coupling/splitting circuit 2133, a third interface of the signal splitting/coupling circuit 2131 is connected to a first interface of the second conversion circuit 2132, a second interface of the second conversion circuit 2132 is connected to a third interface of the signal coupling/splitting circuit 2133, and a first interface of the signal coupling/splitting circuit 2133 is connected to the M second interfaces RF₁ to RF_{M} of the radio frequency processing circuit 213.

In the signal sending scenario, the signal splitting/coupling circuit 2131 may receive the radio frequency transmit signal in the high-frequency alternating-current signal form and the sensing request signal in the differential signal form from the baseband unit 220 through the first interface of the signal splitting/coupling circuit 2131, send the radio frequency transmit signal in the high-frequency alternating-current signal form to the signal coupling/splitting circuit 2133 through the second interface of the signal splitting/coupling circuit 2131, and send the sensing request signal in the differential signal form to the second conversion circuit 2132 through the third interface of the signal splitting/coupling circuit 2131. The second conversion circuit 2132 may convert the sensing request signal in the differential form into a sensing request signal in a low-frequency alternating current form, and may send the sensing request signal in the low-frequency alternating current form to the signal coupling/splitting circuit 2133. The signal coupling/splitting circuit 2133 may couple the radio frequency transmit signal in the high-frequency alternating-current signal form that is output by the signal splitting/coupling circuit 2131 and the sensing request signal in the low-frequency alternating-current signal form that is output by the second conversion circuit 2132 into an alternating-current mixed signal, and may send the alternating-current mixed signal to the bias processing circuit 214 through M radio frequency ends RF₁ to RF_{M} of the radio frequency processing circuit 213.

On the contrary, in the signal receiving scenario, the signal coupling/splitting circuit 2133 may receive an alternating-current mixed signal from the bias processing circuit 214 through the first interface of the signal coupling/splitting circuit 2133. The alternating-current mixed signal includes a radio frequency receive signal in a high-frequency alternating-current signal form and a sensing-acquired signal in a low-frequency alternating-current signal form. The signal coupling/splitting circuit 2133 may send the radio frequency receive signal in the high-frequency alternating-current signal form to the signal separation/splitting circuit 2131 through the second interface of the signal coupling/splitting circuit 2133, and may send the sensing-acquired signal in the low-frequency alternating-current signal form to the second conversion circuit 2132 through the third interface of the signal coupling/splitting circuit 2133. The second conversion circuit 2132 may convert the sensing-acquired signal in the low-frequency alternating current form into a sensing-acquired signal in a differential signal form, and may send the sensing-acquired signal in the differential signal form to the signal splitting/coupling circuit 2131. The signal splitting/coupling circuit 2131 may couple the radio frequency receive signal in the high-frequency alternating current form that is output by the signal coupling/splitting circuit 2133 and the sensing-acquired signal in the differential signal form that is output by the second conversion circuit 2132 into a mixed signal, and may send the mixed signal to the baseband unit 220 through the first interface IX of the radio frequency processing circuit 213.

In the foregoing example, the signal splitting/coupling circuit, the second conversion circuit, and the signal coupling/splitting circuit are configured in the original radio frequency unit, so that through the three circuits, the class of the signal sent by the network management device can be converted into the class of the signal received by the sensing element, and the class of the signal sent by the sensing element can be converted into the class of the signal received by the network management device, thereby providing support for smooth communication between the network management device and the sensing element.

It may be understood that the second conversion circuit 2132 may be any component or any combination of components that can implement mutual conversion between the differential signal and the low-frequency alternating-current signal. For example, for an internal structure of the second conversion circuit 2132, refer to the first conversion circuit 2122 shown in FIG. 6. Details are not described again in this application.

In addition, the foregoing content is described only by using an example in which the radio frequency processing circuit 213 transmits the mixed signal. In an actual scenario, the radio frequency processing circuit 213 may alternatively be configured to transmit a single signal, for example, transmit only one of the radio frequency transmit signal and the sensing request signal, or transmit only one of the radio frequency receive signal and the sensing-acquired signal. For a specific transmission procedure, refer to the foregoing content. Details are not described in this application.

### Change 2

As another change, the radio frequency unit shown in FIG. 7 is different from the radio frequency unit 211 in the existing antenna system. The radio frequency unit in Implementation solution 2 may be further integrated with the bias processing circuit 214. The bias processing circuit 214 can be configured to transmit, to the N terminal elements in a mixed manner, the radio frequency transmit signal and the sensing request signal that are sent by the radio frequency processing circuit 213 and the direct-current power supply signal sent by the power supply 240, and transmit, to the radio frequency processing circuit 213 in a mixed manner, the radio frequency receive signal and the sensing-acquired signal that are sent by the N terminal elements.

It may be understood that the bias processing circuit that can implement the foregoing function has a plurality of possible structures. For example, still as shown in FIG. 8, the bias processing circuit 214 may include a seventh filter element 2141, a first terminal of the seventh filter element 2141 corresponds to the power interface P₂ of the bias processing circuit 214 (for example, the first terminal of the filter element 2141 is the power interface P₂ of the bias processing circuit 214, or the first terminal of the filter element 2141 is connected to the power interface P₂ of the bias processing circuit 214 through a line), and a second terminal of the seventh filter element 2141 is connected to the M first interfaces A₁ to A_{M} of the bias processing circuit 214 and then connected to the T second interfaces H₁ to H_{T} of the bias processing circuit 214.

In the bias processing circuit 214, the seventh filter element 2141 may filter out an alternating-current signal in an input signal, and allow only a direct-current signal in the input signal to pass. For example, in the signal sending scenario, the seventh filter element 2141 may receive the direct-current power supply signal from the power supply 240. Even if the direct-current power supply signal is impure, the seventh filter element 2141 can filter out an alternating-current signal in the impure signal, so that a pure direct-current power supply signal is transmitted to the N terminal elements through the seventh filter element 2141. In addition, because the M first interfaces A₁ to A_{M} of the bias processing circuit 214 are connected and then directly connected to the T second interfaces H₁ to H_{T} of the bias processing circuit 214, a mixed alternating-current signal (including a radio frequency transmit signal in a high-frequency alternating-current signal form and a sensing request signal in a low-frequency alternating-current signal form) sent through the M radio frequency interfaces RF₁ to RF_{M} of the radio frequency processing circuit 213 to the M first interfaces A₁ to A_{M} of the bias processing circuit 214 may be directly transmitted to the N terminal elements on the T radio frequency cables through the T second interfaces H₁ to H_{T} of the bias processing circuit 214. On the contrary, in the signal receiving scenario, because the T second interfaces H₁ to H_{T} of the bias processing circuit 214 are connected and then directly connected to the M first interfaces A₁ to A_{M} of the bias processing circuit 214, the radio frequency receive signal in the high-frequency alternating-current signal form that is sent by the radiating element or the fusion element in the N terminal elements to the T second interfaces H₁ to H_{T} of the bias processing circuit 214 and the sensing-acquired signal in the low-frequency alternating-current signal form that is sent by the sensing element or the fusion element in the N terminal elements to the T second interfaces H₁ to H_{T} of the bias processing circuit 214 may be directly transmitted to the radio frequency processing circuit 213 through the M first interfaces A₁ to A_{M} of the bias processing circuit 214, and then forwarded to the baseband unit 220 after high-frequency transmission and low-frequency conversion processing in the radio frequency processing circuit 213.

It may be understood that the seventh filter element 2141 may be any filter component or a combination element of any plurality of filter components, for example, an inductor, that can allow a direct-current signal to pass and disallow an alternating-current signal to pass. In this way, a characteristic "passing a direct current and blocking an alternating current" of the inductor can be used, to obtain a pure direct-current power supply signal through filtering.

### Change 3

As still another change, because the AISG interface is removed from the radio frequency unit, the direct-current power supply signal input by the power supply 240 into the radio frequency unit may be completely provided to the bias processing circuit 214, and does not need to be provided to the AISG interface. For example, still as shown in FIG. 8, the power interface P₂ of the bias processing circuit 214 may be directly configured as the power interface P of the radio frequency unit, or may be connected to the power interface P of the radio frequency unit through a line, and the power interface P of the radio frequency unit may not be connected to another interface. In this way, after passing through the power interface P of the radio frequency unit, the direct-current power supply signal output by the power supply 240 may be completely transmitted to the seventh filter element 2141, and is completely provided to the N terminal elements after being filtered by the seventh filter element 2141.

In Implementation solution 2, the signal processing unit may be a unit obtained by improving the structure of the radio frequency unit in the existing antenna system. A bias processing function is fused into the radio frequency unit in the existing antenna system, and a system fused with a sensing function may be obtained by directly replacing the radio frequency unit in the existing antenna system. In this way, a new component does not need to be disposed while labor costs and material costs are reduced, thereby reducing system space occupied by adding a new function and implementing a miniaturization design of the system.

It should be noted that the components and locations of the components in any one of FIG. 3 to FIG. 8 are merely a possible division manner of the signal processing unit. The division manner is merely logical function division. In an actual implementation, all or some of the components may be integrated into one physical entity, or may be physically separated. For example, in Implementation solution 1, the radio frequency unit and the signal bias unit may be integrated into one physical entity, or may exist separately as two different physical entities. The first conversion circuit and the first bias circuit may be integrated into one physical entity, or may exist separately as two different physical entities. This is not limited in this application.

### 2. Fusion element

In a possible implementation, the fusion element may have functions of signal splitting, signal combination, and signal transmission. For example, in the signal sending scenario, the fusion element may receive one or more of the radio frequency transmit signal, the sensing request signal, and the direct-current power supply signal from the signal processing unit 210, and may send the radio frequency transmit signal to the radiating element in the fusion element, and send the sensing request signal and the direct-current power supply signal to the sensing element in the fusion element. In the signal receiving scenario, the fusion element may convert a radio wave signal propagated in air into a radio frequency receive signal, may obtain a sensing-acquired signal, and may send the radio frequency receive signal and/or the sensing-acquired signal to the signal processing unit 210.

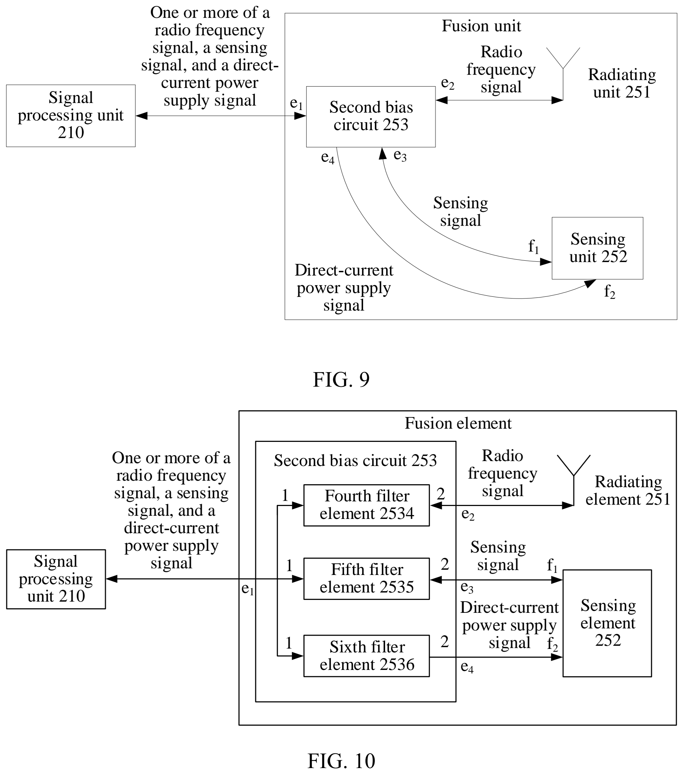

FIG. 9 is a diagram of an example structure of a fusion element according to this application. In this example, the fusion element may include a radiating element 251, a sensing element 252, and a second bias circuit 253, a first interface e₁ of the second bias circuit 253 is connected to the signal processing unit 210, a second interface e₂ of the second bias circuit 253 is connected to the radiating element 251, a third interface e₃ of the second bias circuit 253 is connected to an interface f₁ of the sensing element 252, and a fourth interface e₄ of the second bias circuit 253 is connected to a power interface f₂ of the sensing element 252. In the signal sending scenario, the second bias circuit 253 may receive an input signal from the signal processing unit 210 through the first interface e₁. The input signal may include one or more of a radio frequency transmit signal, a sensing request signal, or a direct-current power supply signal. The second bias circuit 253 may perform split transmission of the input signal. Specifically, the radio frequency transmit signal obtained from the input signal through splitting may be fed to the radiating element 251 through the second interface e₂, and is converted by the radiating element 251 into a radio electromagnetic wave signal, and then the radio electromagnetic wave signal is sent to the air. The sensing request signal obtained from the input signal through splitting is sent to the sensing element 252 through the third interface e₃, and the direct-current power supply signal obtained from the input signal through splitting is provided to the sensing element 252 through the fourth interface e₄, to supply power to the sensing element 252. On the contrary, in the signal receiving scenario, the second bias circuit 253 may receive a radio frequency receive signal from the radiating element 251 through the second interface e₂, receive a sensing-acquired signal from the sensing element 252 through the third interface e₃, and send a radio frequency receive signal and a sensing-acquired signal to the signal processing unit 210 through the first interface e₁. It can be learned that, the second bias circuit is disposed in the fusion element, to implement a function of performing split transmission on a signal that is input by the signal processing unit into the fusion element and a function of performing fused transmission on a signal that is input by the radiating element and a signal that is input by the sensing element, and implement fusion of an antenna receiving/sending function and a sensing receiving/sending function.

It may be understood that the second bias circuit 253 may be any component that can implement signal splitting and signal combination and a combination thereof. For example, FIG. 10 is a diagram of an example structure of a second bias circuit according to this application. The second bias circuit 253 may include a fourth filter element 2534, a fifth filter element 2535, and a sixth filter element 2536, a first terminal of the fourth filter element 2534, a first terminal of the fifth filter element 2535, and a first terminal of the sixth filter element 2536 are connected and then used as the first interface e₁ of the second bias circuit 253, a second terminal of the fourth filter element 2534 serves as the second interface e₂ of the second bias circuit 253, a second terminal of the fifth filter element 2535 serves as the third interface e₃ of the second bias circuit 253, and a second terminal of the sixth filter element 2536 serves as the fourth interface e₄ of the second bias circuit 253.

In the second bias circuit 253, the fourth filter element 2534 may be configured to filter out a direct-current signal and a low-frequency alternating-current signal in an input signal, the fifth filter element 2535 may be configured to filter out a direct-current signal and a high-frequency alternating-current signal in an input signal, and the sixth filter element 2536 may be configured to filter out an alternating-current signal in an input signal. For example, still as shown in FIG. 10, in a signal input scenario, the input signal from the signal processing unit 210 is separately transmitted to the fourth filter element 2534, the fifth filter element 2535, and the sixth filter element 2536. The fourth filter element 2534 allows the high-frequency alternating-current signal in the input signal to pass and blocks the low-frequency alternating-current signal and the direct-current signal in the input signal, so that a pure radio frequency transmit signal in the input signal is coupled into the radiating element 251. The fifth filter element 2535 allows the low-frequency alternating-current signal in the input signal to pass and blocks the high-frequency alternating-current signal and the direct-current signal in the input signal, so that a pure sensing request signal in the input signal is transmitted to the sensing element 252. The sixth filter element 2536 allows the direct-current signal in the input signal to pass and blocks the alternating-current signal in the input signal, so that a pure direct-current power supply signal in the input signal is transmitted to the power supply end f₂ of the sensing element 252, to supply power to the sensing element 252. On the contrary, in the signal receiving scenario, the fourth filter element 2534 may receive the radio frequency receive signal from the radiating element 251, and allow the high-frequency alternating-current signal in the radio frequency receive signal to pass and block the low-frequency alternating-current signal and the direct-current signal in the radio frequency receive signal, so that a pure radio frequency receive signal is transmitted to the signal processing unit 210. The fifth filter element 2535 may receive the sensing-acquired signal from the sensing element 252, and allow the low-frequency alternating-current signal in the sensing-acquired signal to pass and block the high-frequency alternating-current signal and the direct-current signal in the sensing-acquired signal, so that a pure sensing-acquired signal is transmitted to the signal processing unit 210.

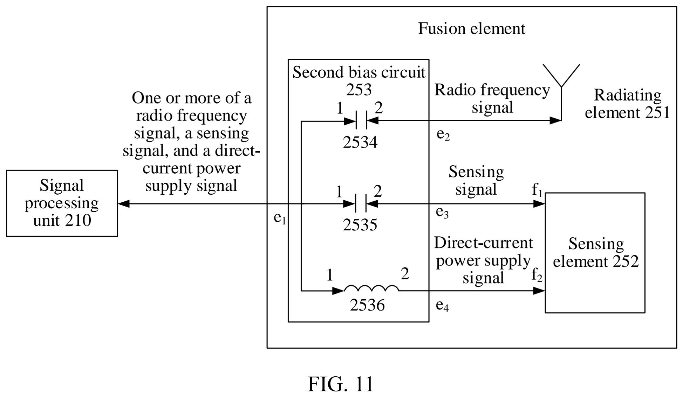

It may be understood that the fourth filter element 2534 may be any filter component or a combination element of any plurality of filter components that can allow the high-frequency alternating-current signal to pass and disallow a signal other than the high-frequency alternating-current signal to pass, the fifth filter element 2535 may be any filter component or a combination element of any plurality of filter components that can allow the low-frequency alternating-current signal to pass and disallow a signal other than the low-frequency alternating-current signal to pass, and the sixth filter element 2536 may be any filter component or a combination element of any plurality of filter components that allow the direct-current signal to pass and disallow the alternating-current signal to pass. Optionally, FIG. 11 is a diagram of an example specific structure of a second bias circuit according to this application. In the figure, for example, the fourth filter element 2534 and the fifth filter element 2535 are capacitors and the sixth filter element 2536 is an inductor. In this way, a characteristic "passing an alternating current and blocking a direct current" of the capacitor is used. A capacitor bandpass frequency of the fourth filter element 2534 is set to a high frequency, to obtain a pure high-frequency alternating-current radio frequency transmit signal and a pure high-frequency alternating-current radio frequency receive signal through filtering; and a capacitor bandpass frequency of the fifth filter element 2535 is set to a low frequency, to obtain a pure low-frequency alternating-current sensing request signal and a pure low-frequency alternating-current sensing-acquired signal through filtering. In addition, a characteristic "passing a direct current and blocking an alternating current" of the inductor can be used, to obtain a pure direct-current power supply signal through filtering.

It should be noted that the components and locations of the components in any one of FIG. 9 to FIG. 11 are merely a possible division manner of the fusion element. The division manner is merely logical function division. In an actual implementation, all or some of the components may be integrated into one physical entity, or may be physically separated. For example, in some embodiments, the second bias circuit and the radiating element may be integrated into one physical entity, or may exist separately as two different physical entities; or the second bias circuit and the sensing element may be integrated into one physical entity, or may exist separately as two different physical entities. This is not limited in this application.

The foregoing content is described only by using an example in which the sensing element is fused in the antenna system. The antenna system may be an antenna system in any communication standard, for example, a 5G communication system, a 5.5G communication system, or even a 6G communication system that may evolve in the future. In addition, the foregoing fusion solution may be further applied to any device or system that needs to be fused with two different functional units, and is not limited to a device or system fused with an antenna and sensing. A signal processing unit is disposed to combine and split any block of signal of two functional units, and a feeding network may be reused to implement at least two functions, thereby reducing labor and material costs.

In addition, based on the foregoing content, this application further provides a chip. The chip may include any one or more of the radio frequency unit, the signal bias unit, or the fusion element, and may further include an interface. The any one or more units are configured to read instructions through the interface, to perform the method corresponding to any one or more units in the foregoing embodiments.

An embodiment of this application further provides a computer-readable storage medium. The computer-readable storage medium stores a computer program. When the computer program runs, the method corresponding to any one or more units in the foregoing embodiments is implemented.

An embodiment of this application further provides a computer program product. When the computer program product is run, the method corresponding to any one or more units in the foregoing embodiments is implemented.

In addition, in various embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. In text descriptions of this application, the character "/" generally represents an "or" relationship between associated objects. In addition, the term "for example" in this application is used to represent giving an example, an illustration, or a description. Any embodiment or design scheme described as an "example" in this application should not be explained as being more preferred or having more advantages than another embodiment or design scheme. Alternatively, it may be understood as that the word "example" is used to present a concept in a specific manner, and does not constitute a limitation on this application.

It may be understood that various numbers in this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. The terms "first", "second", and the like are used to distinguish between similar objects without having to describe a specific order or sequence. In addition, the terms "include", "have", and any variant thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A radio frequency unit, comprising a first interface and at least one second interface, wherein the first interface is configured to be connected to a baseband unit, the at least one second interface is configured to be connected to N terminal elements, and the N terminal elements comprise at least one radiating element and at least one sensing element, wherein N is an integer greater than or equal to 2, and/or comprises at least one radiating and sensing fusion element, wherein N is a positive integer; and
the radio frequency unit is configured to:
receive a radio frequency transmit signal and/or a sensing request signal from the baseband unit through the first interface, and send the radio frequency transmit signal and/or the sensing request signal to the N terminal elements through the at least one second interface; or
receive a radio frequency receive signal from the radiating element in the N terminal elements, a sensing-acquired signal from the sensing element in the N terminal elements, and the radio frequency receive signal and/or the sensing-acquired signal from the fusion element in the N terminal elements through the at least one second interface, and send the radio frequency receive signal and/or the sensing-acquired signal to the baseband unit through the first interface.

2. The radio frequency unit according to claim 1, wherein the at least one second interface comprises M radio frequency interfaces and a sensing interface, the M radio frequency interfaces are connected to M first interfaces of a signal bias unit in one-to-one correspondence, the sensing interface is connected to a second interface of the signal bias unit, and a third interface of the signal bias unit is connected to the N terminal elements, wherein M is a positive integer; and
the radio frequency unit is specifically configured to:
send the radio frequency transmit signal or receive the radio frequency receive signal through the M radio frequency interfaces, and send the sensing request signal or receive the sensing-acquired signal through the sensing interface.

3. The radio frequency unit according to claim 1, wherein the radio frequency unit comprises a radio frequency processing circuit and a bias processing circuit, the radio frequency processing circuit comprises a first interface and M second interfaces, the bias processing circuit comprises M first interfaces and T second interfaces, the first interface of the radio frequency processing circuit corresponds to the first interface of the radio frequency unit, the M second interfaces of the radio frequency processing circuit are connected to the M first interfaces of the bias processing circuit, and the T second interfaces of the bias processing circuit correspond to at least one third interface of the radio frequency unit, wherein T is a positive integer;
the radio frequency processing circuit is configured to:
receive the radio frequency transmit signal and/or the sensing request signal through the first interface of the radio frequency processing circuit, and send the radio frequency transmit signal and/or the sensing request signal to the bias processing circuit through the M second interfaces of the radio frequency processing circuit; or
receive the radio frequency receive signal and/or the sensing-acquired signal from the bias processing circuit through the M second interfaces of the radio frequency processing circuit, and send the radio frequency receive signal and/or the sensing-acquired signal through the first interface of the radio frequency processing circuit; and
the bias processing circuit is configured to:
receive the radio frequency transmit signal and/or the sensing request signal from the radio frequency processing circuit through the M first interfaces of the bias processing circuit, and send the radio frequency transmit signal and/or the sensing request signal to the N terminal elements through the T second interfaces of the bias processing circuit; or
receive the radio frequency receive signal and/or the sensing-acquired signal from the N terminal elements through the T second interfaces of the bias processing circuit, and send the radio frequency receive signal and/or the sensing-acquired signal to the radio frequency processing circuit through the M first interfaces of the bias processing circuit.

4. The radio frequency unit according to claim 3, wherein the radio frequency processing circuit comprises a signal splitting/coupling circuit, a second conversion circuit, and a signal coupling/splitting circuit, a first interface of the signal splitting/coupling circuit corresponds to the first interface of the radio frequency processing circuit, a second interface of the signal splitting/coupling circuit is connected to a second interface of the signal coupling/splitting circuit, a third interface of the signal splitting/coupling circuit is connected to a first interface of the second conversion circuit, a second interface of the second conversion circuit is connected to a third interface of the signal coupling/splitting circuit, and a first interface of the signal coupling/splitting circuit is connected to the M second interfaces of the radio frequency processing circuit;
the signal splitting/coupling circuit is configured to:
receive the radio frequency transmit signal and/or the sensing request signal through the first interface of the signal splitting/coupling circuit, send the radio frequency transmit signal through the second interface of the signal splitting/coupling circuit, and send the sensing request signal through the third interface of the signal splitting/coupling circuit; or
receive the radio frequency receive signal through the second interface of the signal splitting/coupling circuit, receive the sensing-acquired signal through the third interface of the signal splitting/coupling circuit, and send the radio frequency receive signal and/or the sensing request signal through the first interface of the signal splitting/coupling circuit;
the second conversion circuit is configured to:
convert the sensing request signal input through the first interface of the second conversion circuit into a low-frequency alternating-current signal, and send the converted sensing request signal through the second interface of the second conversion circuit; or
convert the sensing-acquired signal input through the second interface of the second conversion circuit into a differential signal, and send the converted sensing-acquired signal through the first interface of the second conversion circuit; and
the signal coupling/splitting circuit is configured to:
receive the radio frequency transmit signal through the second interface of the signal coupling/splitting circuit, receive the converted sensing request signal through the third interface of the signal coupling/splitting circuit, and send the radio frequency transmit signal and/or the converted sensing request signal through the first interface of the signal coupling/splitting circuit; or
receive the radio frequency receive signal and/or the sensing-acquired signal through the first interface of the signal coupling/splitting circuit, send the radio frequency receive signal through the second interface of the signal coupling/splitting circuit, and send the sensing-acquired signal through the third interface of the signal coupling/splitting circuit.

5. The radio frequency unit according to claim 3 or 4, wherein the bias processing circuit further comprises a power interface, and the power interface is connected to a power supply; and
the bias processing circuit is further configured to:
receive a direct-current power supply signal from the power supply through the power interface of the bias processing circuit, and send the direct-current power supply signal to the N terminal elements through the T second interfaces of the bias processing circuit.

6. The radio frequency unit according to claim 5, wherein the bias processing circuit further comprises a seventh filter element, a first terminal of the seventh filter element corresponds to the power interface of the bias processing circuit, and a second terminal of the seventh filter element is connected to the M first interfaces of the bias processing circuit and then connected to the T second interfaces of the bias processing circuit; and
the seventh filter element is configured to filter out an alternating-current signal in an input signal.

7. The radio frequency unit according to claim 6, wherein the seventh filter element is an inductor.

8. A signal bias unit, comprising M first interfaces, a second interface, and T third interfaces, wherein the M first interfaces are connected to M radio frequency interfaces of a radio frequency unit, the second interface is connected to a sensing interface of the radio frequency unit, the T third interfaces are connected to N terminal elements, and the N terminal elements comprise at least one radiating element and at least one sensing element, wherein N is an integer greater than or equal to 2, and/or comprise at least one radiating and sensing fusion element, wherein N is a positive integer, and M and T are positive integers; and
the signal bias unit is configured to:
receive a radio frequency transmit signal from the radio frequency unit through the M first interfaces, receive a sensing request signal from the radio frequency unit through the second interface, and send the radio frequency transmit signal and/or the sensing request signal to the N terminal elements through the T third interfaces; or
receive a radio frequency receive signal from the radiating element in the N terminal elements, a sensing-acquired signal from the sensing element in the N terminal elements, and the radio frequency receive signal and/or the sensing-acquired signal from the fusion element in the N terminal elements through the T third interfaces, send the radio frequency receive signal to the radio frequency unit through the M first interfaces, and send the sensing-acquired signal to the radio frequency unit through the second interface.

9. The signal bias unit according to claim 8, wherein the T second interfaces are connected to T radio frequency cables in one-to-one correspondence, and one or more terminal elements are disposed on each radio frequency cable.

10. The signal bias unit according to claim 8 or 9, wherein the signal bias unit further comprises a power interface, and the power interface is connected to a power supply; and
the signal bias unit is further configured to:
receive a direct-current power supply signal from the power supply through the power interface, and send the direct-current power supply signal to the N terminal elements through the T third interfaces.

11. The signal bias unit according to claim 10, wherein the radio frequency transmit signal and the radio frequency receive signal that are received by the signal bias unit are high-frequency alternating-current signals, and the sensing request signal and the sensing-acquired signal that are received by the signal bias unit are low-frequency alternating-current signals;
the signal bias unit further comprises a first bias circuit, the first bias circuit comprises M first filter elements, a second filter element, and a third filter element, first terminals of the M first filter elements are connected to the M first interfaces of the signal bias unit in one-to-one correspondence, a first terminal of the second filter element is configured to be connected to the second interface of the signal bias unit, a first terminal of the third filter element is connected to the power interface of the signal bias unit, second terminals of the M first filter elements, a second terminal of the second filter element, and a second terminal of the third filter element are connected and then connected to the T third interfaces of the signal bias unit;
the first filter element is configured to filter out a direct-current signal and a low-frequency alternating-current signal in an input signal;
the second filter element is configured to filter out a direct-current signal and a high-frequency alternating-current signal in an input signal; and
the third filter element is configured to filter out an alternating-current signal in an input signal.

12. The signal bias unit according to claim 11, wherein the first filter element and the second filter element are capacitors, and the third filter element is an inductor.

13. The signal bias unit according to any one of claims 8 to 12, wherein the sensing request signal from the radio frequency unit is a differential signal, and the sensing-acquired signal from the terminal element is a low-frequency alternating-current signal;
the signal bias unit comprises a first conversion circuit, a first interface of the first conversion circuit corresponds to the second interface of the signal bias unit, and a second interface of the first conversion circuit is configured to be connected to the T third interfaces of the signal bias unit; and
the first conversion circuit is configured to:
receive the sensing request signal from the radio frequency unit through the first interface of the first conversion circuit, convert the sensing request signal into a low-frequency alternating-current signal, and then send the converted sensing request signal through the second interface of the first conversion circuit; or
receive the sensing-acquired signal from the terminal element through the second interface of the first conversion circuit, convert the sensing-acquired signal into a differential signal, and then send the converted sensing-acquired signal through the first interface of the first conversion circuit.

14. A terminal element, comprising a radiating element, a sensing element, and a second bias circuit, wherein a first interface of the second bias circuit is connected to a signal processing unit, a second interface of the second bias circuit is connected to the radiating element, and a third interface of the second bias circuit is connected to the sensing element;
the second bias circuit is configured to:
receive a radio frequency transmit signal and/or a sensing request signal from the signal processing unit through the first interface of the second bias circuit, send the radio frequency transmit signal to the radiating element through the second interface of the second bias circuit, and send the sensing request signal to the sensing element through the third interface of the second bias circuit; or
receive a radio frequency receive signal from the radiating element through the second interface of the second bias circuit, receive a sensing-acquired signal from the sensing element through the third interface of the second bias circuit, and send the radio frequency receive signal and/or the sensing-acquired signal to the signal processing unit through the first interface of the second bias circuit;
the radiating element is configured to:
convert the radio frequency transmit signal from the second bias circuit into an electromagnetic wave signal, and then send the electromagnetic wave signal; or
convert a received electromagnetic wave signal into the radio frequency receive signal, and then send the radio frequency receive signal to the second bias circuit; and
the sensing element is configured to:
perform a corresponding acquisition operation based on an indication of the sensing request signal from the second bias circuit; or
send, to the second bias circuit, a sensing-acquired signal acquired in a period of time.

15. The terminal element according to claim 14, wherein the second bias circuit further comprises a fourth interface, and the fourth interface is connected to a power interface of the sensing element; and
the second bias circuit is further configured to:
receive a direct-current power supply signal from the signal processing unit through the first interface of the second bias circuit, and send the direct-current power supply signal to the sensing element through the fourth interface of the second bias circuit.

16. The terminal element according to claim 15, wherein the second bias circuit comprises a fourth filter element, a fifth filter element, and a sixth filter element, a first terminal of the fourth filter element, a first terminal of the fifth filter element, and a first terminal of the sixth filter element are connected and then connected to the first interface of the second bias circuit, a second terminal of the fourth filter element corresponds to the second interface of the second bias circuit, a second terminal of the fifth filter element corresponds to the third interface of the second bias circuit, and a second terminal of the sixth filter element corresponds to the fourth interface of the second bias circuit;
the fourth filter element is configured to filter out a direct-current signal and a low-frequency alternating-current signal in an input signal;
the fifth filter element is configured to filter out a direct-current signal and a high-frequency alternating-current signal in an input signal; and
the sixth filter element is configured to filter out an alternating-current signal in an input signal.

17. The terminal element according to claim 16, wherein the fourth filter element and the fifth filter element are capacitors, and the sixth filter element is an inductor.

18. A radiating and sensing fusion system, comprising a signal processing unit and N terminal elements connected to the signal processing unit, wherein the N terminal elements comprise at least one radiating element and at least one sensing element, wherein N is a positive integer greater than or equal to 2, and/or comprise at least one radiating and sensing fusion element, wherein N is a positive integer; and
the signal processing unit is configured to send a radio frequency transmit signal and/or a sensing request signal to the N terminal elements, or configured to receive a radio frequency receive signal from the radiating element in the N terminal elements, a sensing-acquired signal from the sensing element in the N terminal elements, and the radio frequency receive signal and/or the sensing-acquired signal from the fusion element in the N terminal elements.

19. The fusion system according to claim 18, wherein the fusion system further comprises a power supply, and the power supply is connected to the signal processing unit;
the power supply is configured to send a direct-current power supply signal to the signal processing unit; and
the signal processing unit is further configured to send the direct-current power supply signal from the power supply to the N terminal elements.

20. The fusion system according to claim 18 or 19, wherein the signal processing unit comprises a radio frequency unit and a signal bias unit, and the signal bias unit is separately connected to the radio frequency unit and the N terminal elements;
the radio frequency unit is configured to send the radio frequency transmit signal and/or the sensing request signal to the signal bias unit, or configured to receive the radio frequency receive signal and/or the sensing-acquired signal from the signal bias unit; and
the signal bias unit is configured to send the radio frequency transmit signal and/or the sensing request signal from the radio frequency unit to the N terminal elements, or configured to send the radio frequency receive signal from the radiating element in the N terminal elements, the sensing-acquired signal from the sensing element in the N terminal elements, and the radio frequency receive signal and/or the sensing-acquired signal from the fusion element in the N terminal elements to the radio frequency unit.

21. The fusion system according to claim 20, wherein the signal bias unit comprises T third interfaces, the T third interfaces are connected to T radio frequency cables, and one or more terminal elements are disposed on each radio frequency cable, wherein T is a positive integer; and
the signal bias unit is specifically configured to: send the radio frequency transmit signal and/or the sensing request signal through the T third interfaces, or receive the radio frequency receive signal and/or the sensing-acquired signal through the T third interfaces.

22. The fusion system according to claim 20 or 21, wherein the radio frequency unit comprises M radio frequency interfaces, the signal bias unit comprises M first interfaces and the T third interfaces, the M radio frequency interfaces are connected to the M first interfaces in one-to-one correspondence, and the T third interfaces are connected to the N terminal elements, wherein M and T are positive integers;
the radio frequency unit is specifically configured to: send the radio frequency transmit signal and receive the radio frequency receive signal through the M radio frequency interfaces; and
the signal bias unit is specifically configured to: receive the radio frequency transmit signal and send the radio frequency receive signal through the M first interfaces, and send the radio frequency transmit signal and receive the radio frequency receive signal through the T third interfaces.

23. The fusion system according to any one of claims 20 to 22, wherein the radio frequency unit comprises a sensing interface, the signal bias unit comprises a second interface and the T third interfaces, the sensing interface is connected to the second interface, and the T third interfaces are connected to the N terminal elements, wherein T is a positive integer;
the radio frequency unit is specifically configured to: send the sensing request signal and receive the sensing-acquired signal through the sensing interface; and
the signal bias unit is specifically configured to: receive the sensing request signal and send the sensing-acquired signal through the second interface, and send the sensing request signal and receive the sensing-acquired signal through the T third interfaces.

24. The fusion system according to any one of claims 20 to 23, wherein the signal bias unit comprises a power interface and the T third interfaces, the power interface is connected to the power supply, and the T third interfaces are connected to the N terminal elements, wherein T is a positive integer; and
the signal bias unit is further configured to: receive the direct-current power supply signal from the power supply through the power interface, and send the direct-current power supply signal through the T third interfaces.

25. The fusion system according to any one of claims 20 to 24, wherein the radio frequency transmit signal and the radio frequency receive signal that are received by the signal bias unit are high-frequency alternating-current signals, and the sensing request signal and the sensing-acquired signal that are received by the signal bias unit are low-frequency alternating-current signals;
the signal bias unit comprises a first bias circuit, the first bias circuit comprises at least one first filter element, a second filter element, and a third filter element, a first terminal of the at least one first filter element is configured to receive the radio frequency transmit signal from the radio frequency unit or the radio frequency receive signal from the terminal element, a first terminal of the second filter element is configured to receive the sensing request signal from the radio frequency unit or the sensing-acquired signal from the terminal element, a first terminal of the third filter element is configured to receive the direct-current power supply signal, and a second terminal of the at least one first filter element, a second terminal of the second filter element, and a second terminal of the third filter element are connected and then connected to the N terminal elements;
the first filter element is configured to filter out a direct-current signal and a low-frequency alternating-current signal in an input signal;
the second filter element is configured to filter out a direct-current signal and a high-frequency alternating-current signal in an input signal; and
the third filter element is configured to filter out an alternating-current signal in an input signal.

26. The fusion system according to claim 25, wherein the first filter element and the second filter element are capacitors, and the third filter element is an inductor.

27. The fusion system according to any one of claims 20 to 26, wherein the sensing request signal from the radio frequency unit is a differential signal, and the sensing-acquired signal from the terminal element is a low-frequency alternating-current signal;
the signal bias unit comprises a first conversion circuit, a first interface of the first conversion circuit is configured to receive the sensing request signal from the radio frequency unit, and a second interface of the first conversion circuit is configured to be connected to the N terminal elements; and
the first conversion circuit is configured to: convert the sensing request signal received through the first interface of the first conversion circuit into a low-frequency alternating-current signal, and send the converted sensing request signal through the second interface of the first conversion circuit; or receive the sensing-acquired signal from the terminal element through the second interface of the first conversion circuit, convert the sensing-acquired signal into a differential signal, and send the converted sensing-acquired signal through the first interface of the first conversion circuit.

28. The fusion system according to claim 18 or 19, wherein the signal processing unit comprises a radio frequency unit, the radio frequency unit comprises a radio frequency processing circuit and a bias processing circuit, and the bias processing circuit is separately connected to the radio frequency processing circuit and the N terminal elements;
the radio frequency processing circuit is configured to send the radio frequency transmit signal and/or the sensing request signal to the bias processing circuit, or configured to receive the radio frequency receive signal and/or the sensing-acquired signal from the bias processing circuit; and
the bias processing circuit is configured to send the radio frequency transmit signal and/or the sensing request signal from the radio frequency processing circuit to the N terminal elements, or configured to send the radio frequency receive signal and/or the sensing-acquired signal from the N terminal elements to the radio frequency processing circuit.

29. The fusion system according to claim 28, wherein the radio frequency processing circuit comprises a first interface and M second interfaces, the bias processing circuit comprises M first interfaces and T second interfaces, the M second interfaces of the radio frequency processing circuit are connected to the M first interfaces of the bias processing circuit, and the T second interfaces of the bias processing circuit are connected to the N terminal elements, wherein M and T are positive integers;
the radio frequency processing circuit is specifically configured to: receive the radio frequency transmit signal and/or the sensing request signal through the first interface of the radio frequency processing circuit, and send the radio frequency transmit signal and/or the sensing request signal to the bias processing circuit through the M second interfaces of the radio frequency processing circuit; or receive the radio frequency receive signal and/or the sensing-acquired signal from the bias processing circuit through the M second interfaces of the radio frequency processing circuit, and send the radio frequency receive signal and/or the sensing-acquired signal through the first interface of the radio frequency processing circuit; and
the bias processing circuit is specifically configured to: receive the radio frequency transmit signal and/or the sensing request signal from the radio frequency processing circuit through the M first interfaces of the bias processing circuit, and send the radio frequency transmit signal and/or the sensing request signal to the N terminal elements through the T second interfaces of the bias processing circuit; or receive the radio frequency receive signal and/or the sensing-acquired signal from the N terminal elements through the T second interfaces of the bias processing circuit, and send the radio frequency receive signal and/or the sensing-acquired signal to the radio frequency processing circuit through the M first interfaces of the bias processing circuit.

30. The fusion system according to claim 28 or 29, wherein the radio frequency processing circuit comprises a signal splitting/coupling circuit, a second conversion circuit, and a signal coupling/splitting circuit, a second interface of the signal splitting/coupling circuit is connected to a second interface of the signal coupling/splitting circuit, a third interface of the signal splitting/coupling circuit is connected to a first interface of the second conversion circuit, a second interface of the second conversion circuit is connected to a third interface of the signal coupling/splitting circuit, and a first interface of the signal coupling/splitting circuit is connected to the bias processing circuit;
the signal splitting/coupling circuit is configured to: receive the radio frequency transmit signal and/or the sensing request signal through a first interface of the signal splitting/coupling circuit, send the radio frequency transmit signal through the second interface of the signal splitting/coupling circuit, and send the sensing request signal through the third interface of the signal splitting/coupling circuit; or receive the radio frequency receive signal through the second interface of the signal splitting/coupling circuit, receive the sensing-acquired signal through the third interface of the signal splitting/coupling circuit, and send the radio frequency receive signal and/or the sensing request signal through a first interface of the signal splitting/coupling circuit;
the second conversion circuit is configured to: convert the sensing request signal input through the first interface of the second conversion circuit into a low-frequency alternating-current signal, and send the converted sensing request signal through the second interface of the second conversion circuit; or convert the sensing-acquired signal input through the second interface of the second conversion circuit into a differential signal, and send the converted sensing-acquired signal through the first interface of the second conversion circuit; and
the signal coupling/splitting circuit is configured to: receive the radio frequency transmit signal through the second interface of the signal coupling/splitting circuit, receive the converted sensing request signal through the third interface of the signal coupling/splitting circuit, and send the radio frequency transmit signal and/or the converted sensing request signal through the first interface of the signal coupling/splitting circuit; or receive the radio frequency receive signal and/or the sensing-acquired signal through the first interface of the signal coupling/splitting circuit, send the radio frequency receive signal through the second interface of the signal coupling/splitting circuit, and send the sensing-acquired signal through the third interface of the signal coupling/splitting circuit.

31. The fusion system according to any one of claims 28 to 30, wherein the bias processing circuit comprises a power interface, and the power interface is connected to the power supply; and
the bias processing circuit is further configured to receive the direct-current power supply signal from the power supply through the power interface of the bias processing circuit, and send the direct-current power supply signal to the N terminal elements.

32. The fusion system according to claim 31, wherein the bias processing circuit comprises a seventh filter element, a first terminal of the seventh filter element corresponds to the power interface of the bias processing circuit, and a second terminal of the seventh filter element is connected to the N terminal elements; and
the seventh filter element is configured to filter out an alternating-current signal in an input signal.

33. The fusion system according to claim 32, wherein the seventh filter element is an inductor.

34. The fusion system according to any one of claims 18 to 33, wherein the radiating and sensing fusion element comprises a radiating element, a sensing element, and a second bias circuit, a first interface of the second bias circuit is connected to the signal processing unit, a second interface of the second bias circuit is connected to the radiating element, and a third interface of the second bias circuit is connected to the sensing element;
the second bias circuit is configured to: receive the radio frequency transmit signal and/or the sensing request signal from the signal processing unit through the first interface of the second bias circuit, send the radio frequency transmit signal to the radiating element through the second interface of the second bias circuit, and send the sensing request signal to the sensing element through the third interface of the second bias circuit; or receive a radio frequency receive signal from the radiating element through the second interface of the second bias circuit, receive a sensing-acquired signal from the sensing element through the third interface of the second bias circuit, and send the radio frequency receive signal and/or the sensing-acquired signal to the signal processing unit through the first interface of the second bias circuit;
the radiating element is configured to: convert the radio frequency transmit signal from the second bias circuit into an electromagnetic wave signal, and then send the electromagnetic wave signal; or convert a received electromagnetic wave signal into the radio frequency receive signal, and then send the radio frequency receive signal to the second bias circuit; and
the sensing element is configured to: perform a corresponding acquisition operation based on an indication of the sensing request signal from the second bias circuit; or send, to the second bias circuit, a sensing-acquired signal acquired in a period of time.

35. The fusion system according to claim 34, wherein the second bias circuit further comprises a fourth interface, and the fourth interface is connected to a power interface of the sensing element; and
the second bias circuit is further configured to: receive the direct-current power supply signal from the signal processing unit through the first interface of the second bias circuit, and send the direct-current power supply signal to the sensing element through the fourth interface of the second bias circuit.

36. The fusion system according to claim 35, wherein the second bias circuit comprises a fourth filter element, a fifth filter element, and a sixth filter element, a first terminal of the fourth filter element, a first terminal of the fifth filter element, and a first terminal of the sixth filter element are connected and then connected to the first interface of the second bias circuit, a second terminal of the fourth filter element corresponds to the second interface of the second bias circuit, a second terminal of the fifth filter element corresponds to the third interface of the second bias circuit, and a second terminal of the sixth filter element corresponds to the fourth interface of the second bias circuit;
the fourth filter element is configured to filter out a direct-current signal and a low-frequency alternating-current signal in an input signal;
the fifth filter element is configured to filter out a direct-current signal and a high-frequency alternating-current signal in an input signal; and
the sixth filter element is configured to filter out an alternating-current signal in an input signal.

37. The fusion system according to claim 36, wherein the fourth filter element and the fifth filter element are capacitors, and the sixth filter element is an inductor.

38. The fusion system according to any one of claims 18 to 37, wherein the fusion system further comprises a baseband unit, and the baseband unit is connected to the signal processing unit;
the baseband unit is configured to: send the radio frequency transmit signal to the signal processing unit, or receive the radio frequency receive signal from the signal processing unit; and
the signal processing unit is configured to: receive the radio frequency transmit signal from the baseband unit, or send the radio frequency receive signal to the baseband unit.

39. The fusion system according to claim 38, further comprising a network management device, wherein the network management device is connected to the baseband unit;
the network management device is configured to: send the sensing request signal to the baseband unit, or receive a sensing-acquired signal from the baseband unit;
the baseband unit is further configured to: send the sensing request signal to the signal processing unit, or receive the sensing-acquired signal from the signal processing unit, and send the sensing-acquired signal to the network management device; and
the signal processing unit is further configured to receive the sensing request signal from the baseband unit, or send the sensing-acquired signal to the baseband unit.
